# EUROPÄISCHE PATENTSCHRIFT

(11) **EP 3 715 586 B1**
(45) Veröffentlichungstag und Bekanntmachung des Hinweises auf die Patenterteilung: **03.05.2023**
(21) Anmeldenummer: 20163650.3
(22) Anmeldetag: 17.03.2020
(51) Int. Cl.: F01D 5/14, F01D 5/16

(54) **ROTOR-SCHAUFELBLATT EINER STRÖMUNGSMASCHINE**
ROTOR BLADE OF A TURBOMACHINE
PALE D'AUBE DE ROTOR D'UNE TURBOMACHINE

(30) Priorität: 27.03.2019 DE 102019107839
(43) Veröffentlichungstag der Anmeldung: 30.09.2020
(73) Patentinhaber: Rolls-Royce Deutschland Ltd & Co KG, 15827 Blankenfelde-Mahlow (DE)
(72) Erfinder: ERYILKI, Cetin, 15827 Blankenfelde-Mahlow (DE); JOHANN, Erik, 15827 Blankenfelde-Mahlow (DE)
(74) Vertreter: Müller, Wolfram Hubertus

(56) Entgegenhaltungen:
- EP-A2- 1 111 188
- EP-A2- 1 953 341
- EP-B1- 1 111 188
- WO-A1-2015/126454

## Beschreibung

Die Erfindung betrifft ein Rotor-Schaufelblatt einer Strömungsmaschine gemäß dem Oberbegriff des Patentanspruchs 1.

Es ist bekannt, dass die Schaufeln der Rotoren einer Strömungsmaschine, beispielsweise die Fanschaufeln eines Turbofantriebwerks bei Teillast erhöhte Schaufelschwingungen ausbilden, die als Schaufelflattern oder Flattern bezeichnet werden. Schaufelflattern entsteht durch synchrone Schaufelschwingungen, welche mit aerodynamischen Kräften in einer Eigenfrequenz gekoppelt sind, so dass sich aerodynamische Kräfte und Schwingungen verstärken. Ein solches Flattern ist nachteilig und kann zu Schäden bis hin zu einem Schaufelverlust führen.

Die WO 2015/126454 A1 beschreibt verschiedene Variationen der Pfeilung eines Rotor-Schaufelblatts.

Aus der EP 1 111 188 A2 ist ein gattungsgemäßes Rotor-Schaufelblatt bekannt. Das Schaufelblatt weist eine von der Höhe des Schaufelblatts abhängige Profilsehnenlänge, eine axiale Variation der Vorderkante und eine axiale Variation der Hinterkante auf.

Der Erfindung liegt die Aufgabe zugrunde, Rotor-Schaufelblätter einer Strömungsmaschine bereitzustellen, bei denen die Gefahr eines Flatterns der Rotor-Schaufelblätter im Teillastbetrieb reduziert ist.

Diese Aufgabe wird durch ein Rotor-Schaufelblatt mit den Merkmalen des Patentanspruchs 1 gelöst. Ausgestaltungen der Erfindung sind in den abhängigen Ansprüchen angegeben.

Danach betrachtet die Erfindung ein Rotor-Schaufelblatt einer Strömungsmaschine, das eine Vorderkante und eine Hinterkante aufweist. Entlang der Vorderkante bildet das Schaufelblatt eine Vorderkantenlinie und entlang der Hinterkante eine Hinterkantenlinie aus. Das Schaufelblatt weist des Weiteren eine von der Höhe abhängige Profilsehnenlänge auf, wobei die Profilsehne die Verbindungslinie zwischen der Vorderkante und der Hinterkante des Schaufelblatts ist. Die Profilsehnenlänge wird im folgenden als tatsächliche Profilsehnenlänge und die Profilsehnen als tatsächliche Profilsehnen bezeichnet, in Abgrenzung zu einer projizierten Profilsehnenlänge, die noch erläutert wird.

Das Schaufelblatt besitzt eine radiale Erstreckung. Diese definiert eine radiale Richtung des Schaufelblatts. Eine axiale Richtung des Schaufelblatts ist dadurch definiert, dass sie senkrecht zu der radialen Richtung und dabei in Richtung der Hinterkante verläuft. Da bei einem verdrehten Schaufelblatt, wie es typischerweise Anwendung findet, in jedem Profilsehnenschnitt die Profilsehne in einer anderen Richtung verläuft, ist es zur Definition einer eindeutigen axialen Richtung erforderlich, einen bestimmten Profilsehnenschnitt für die Definition der axialen Richtung auszuwählen. In der vorliegenden Beschreibung wird hierbei der radial unterste Profilsehnenschnitt betrachtet. Es handelt sich hierbei um den Profilsehnenschnitt, der unmittelbar oberhalb des Schaufelfußes erfolgt. Da der Schaufelfuß in axialer Richtung geneigt sein kann, wird der radial unterste vollständige Profilsehnenschnitt betrachtet, der einen Punkt der Vorderkante und einen Punkt der Hinterkante des Schaufelblatts in einer bestimmten radialen Höhe des Schaufelblatts umfasst.

Das Schaufelblatt wird in einer Seitenansicht betrachtet, wobei die betrachtete Seitenansicht eine Orthogonalprojektion des Schaufelblatts in einer Ebene darstellt, die durch die wie oben definierte axiale Richtung und radiale Richtung aufgespannt wird. In dieser Seitenansicht ist eine maximale projizierte Sehnenlänge definiert als axialer Abstand zwischen dem axial vordersten Punkt der Vorderkante und dem axial hintersten Punkt der Hinterkante des Schaufelblatts. Es handelt sich um eine projizierte Sehnenlänge, da bei einer Verdrehung des Schaufelblatts die Vorderkante und die Hinterkante in die Ebene der Seitenansicht projizierte Kanten sind.

Es ist vorgesehen, dass bezogen auf die betrachtete Seitenansicht die axiale Position der Hinterkante des Schaufelblatts abhängig von der Höhe des Schaufelblatts über einen hinteren axialen Bereich variiert, wobei die Variation der axialen Position der Hinterkante im hinteren axialen Bereich mindestens 10% der maximalen projizierten Sehnenlänge beträgt. Die Hinterkantenlinie ist somit in der Seitenansicht gekrümmt ausgebildet und ihre axiale Position variiert abhängig von der Schaufelhöhe.

Weiter ist vorgesehen, dass die Hinterkante des Schaufelblatts einen axial hintersten Punkt in einer Höhe des Schaufelblatts annimmt, die im Bereich zwischen 20% und 50% der Gesamthöhe des Schaufelblatts an der Hinterkante liegt. Die Vorderkante des Schaufelblatts nimmt einen axial vordersten Punkt in einer Höhe des Schaufelblatts an, die im Bereich zwischen 15% und 35% der Gesamthöhe des Schaufelblatts an der Vorderkante liegt.

Weiter ist vorgesehen, dass die Variation der axialen Position der Vorderkante im vorderen axialen Bereich und die Variation der axialen Position der Hinterkante im hinteren axialen Bereich identisch sind oder sich diese um maximal 10% bezogen auf die Variation der axialen Position der Vorderkante im vorderen axialen Bereich unterscheiden.

Die vorliegende Erfindung beruht auf der Erkenntnis, dass durch eine Ausgestaltung des Kantenverlaufs eines Schaufelblatts dahingehend, dass zusätzlich zur Vorderkante auch die Hinterkante über der Höhe des Schaufelblatts in ihrer axialen Erstreckung variiert, die mechanischen Eigenschaften und die aerodynamischen Kräfte gegengekoppelt werden können, so dass der verstärkende Einfluss, der zu einem Schaufelflattern führt, verhindert oder zumindest reduziert wird. So kann über einen gekrümmten Verlauf der Hinterkante das Schaufelblatt in gewünschten Höhenbereichen an der Hinterkante verlängert werden. Die damit verbundene Verlagerung von Schaufelmasse in Richtung der Hinterkante des Schaufelblatts reduziert ein Schaufelflattern.

Als Schaufelblatt wird der Bereich einer Schaufel bezeichnet, der aerodynamisch wirksam ist. Nicht Bestandteil des Schaufelblatts ist der Schaufelfuß, wobei eine Schaufel durch Schaufelfuß und Schaufelblatt gebildet ist.

Es wird darauf hingewiesen, dass bei der Bestimmung des axial vordersten Punktes der Vorderkante und des axial hintersten Punktes der Hinterkante derjenige Bereich der Vorderkante und der Hinterkante nicht berücksichtigt wird, der sich ausgehend von dem jeweiligen Fußpunkt an einem Schaufelfuß über 5 % der radialen Höhe an der Vorderkante und an der Hinterkante erstreckt. Es werden somit die untersten 5 % der Höhe von Vorderkante und Hinterkante ausgehend von der Nabe bei der Bestimmung des axial vordersten Punktes der Vorderkante und des axial hintersten Punktes der Hinterkante nicht betrachtet. Dies erfolgt deswegen, um den Bereich der Übergangsradien zur Anbindung des Schaufelblatts an die Nabe aus der Betrachtung heraus zu lassen.

Eine Ausgestaltung der Erfindung sieht vor, dass die Variation der axialen Position der Hinterkante im hinteren axialen Bereich mindestens 20% der maximalen projizierten Sehnenlänge beträgt. Insbesondere kann vorgesehen sein, dass die Variation der axialen Position der Hinterkante im hinteren axialen Bereich im Bereich zwischen 20% und 35%, insbesondere im Bereich von 23% und 27% der maximalen projizierten Sehnenlänge liegt. Soweit hier und an anderer Stelle Bereichsangaben genannt sind, sind die Grenzwerte des Bereichs jeweils mit eingeschlossen (abgeschlossenes Intervall).

Eine weitere Ausgestaltung der Erfindung sieht vor, dass die Variation der axialen Position der Vorderkante im vorderen axialen Bereich mindestens 20% der maximalen projizierten Sehnenlänge beträgt. Insbesondere kann vorgesehen sein, dass die Variation der axialen Position der Vorderkante im vorderen axialen Bereich im Bereich zwischen 20% und 35%, insbesondere im Bereich zwischen 23% und 27% der maximalen projizierten Sehnenlänge liegt.

Gemäß einer weiteren Ausgestaltung liegt die Profilsehnenlänge an der Schaufelspitze des Schaufelblatts im Bereich zwischen 30% und 70%, insbesondere im Bereich zwischen 40% und 60%, insbesondere im Bereich zwischen 45% und 55% der maximalen projizierten Sehnenlänge.

Weitere Ausgestaltungen betreffen die radiale Höhe, in der das Schaufelblatt den axial hintersten Punkt und den axial vordersten Punkt der axialen Erstreckung annimmt, wobei die axiale Erstreckung sich immer auf die betrachtete Seitenansicht bezieht, also nicht die tatsächliche Profilsehnenlänge betrifft, sondern die Projektion der tatsächlichen Profilsehnenlänge in die Ebene der Seitenansicht. Der axial hinterste Punkt gibt dabei den axialen Punkt an, bis zu dem sich das Schaufelblatt in der betrachteten Seitenansicht nach hinten erstreckt. Der axial vorderste Punkt gibt den axialen Punkt an, bis zu dem sich das Schaufelblatt in der betrachteten Seitenansicht nach vorne erstreckt.

Die Hinterkante des Schaufelblatts nimmt gemäß einer Ausgestaltung der Erfindung einen axial hintersten Punkt in einer Höhe des Schaufelblatts an, die im Bereich zwischen 20% und 40%, insbesondere im Bereich zwischen 33% und 37% der Gesamthöhe des Schaufelblatts an der Hinterkante liegt. Die Höhe des Schaufelblattes, in der die Hinterkante den axial hintersten Punkt einnimmt, beeinflusst die Steifigkeit der Schaufel an der Schaufelspitze. Durch den genannten Bereich (20% bis 40% bzw. 33% bis 37%) wird eine vorteilhafte Steifigkeit an der Schaufelspitze bereitgestellt, die ein Schaufelflattern im Teillastbetrieb verhindert oder reduziert.

Gemäß einer weiteren Ausgestaltung nimmt die Vorderkante des Schaufelblatts einen axial vordersten Punkt in einer Höhe des Schaufelblatts an, die im Bereich zwischen 15% und 28%, insbesondere im Bereich zwischen 18% und 24% der Gesamthöhe des Schaufelblatts an der Vorderkante liegt.

Die maximale Profilsehnenlänge des Schaufelblatts ist in derjenigen Höhe des Schaufelblatts realisiert, in der der Abstand zwischen der Vorderkante und der Hinterkante am größten ist. Gemäß Ausgestaltungen der Erfindung ist die maximale Profilsehnenlänge in einer Höhe des Schaufelblatts realisiert ist, die im Bereich zwischen 15% und 65%, insbesondere im Bereich zwischen 50% und 60% der Gesamthöhe des Schaufelblatts an der Vorderkante liegt. Dies bedeutet, dass die maximale axiale Erstreckung des Schaufelblatts in der unteren Hälfte des Schaufelblatts oder nur geringfügig oberhalb der mittleren Höhe bezogen auf die Höhe des Schaufelblatts an der Vorderkante liegt.

Es wird darauf hingewiesen, dass es sich bei der maximalen Profilsehnenlänge nicht um eine projizierte Sehnenlänge handelt, sondern die tatsächliche Profilsehnenlänge. Lediglich für den Profilsehnenschnitt, der die axiale Richtung definiert, ist die in der Seitenansicht dargestellte projizierte Profilsehnenlänge gleich der tatsächlichen Profilsehnenlänge.

Es wird weiter darauf hingewiesen, dass die maximale Profilsehnenlänge einen anderen Parameter darstellt als die wie oben definierte maximale projizierte Sehnenlänge. Die maximale Profilsehnenlänge bezieht sich auf eine maximale Sehnenlänge, die das Schaufelblatt in einer bestimmten radialen Höhe der Schaufel einnimmt. Die wie oben definierte maximale projizierte Sehnenlänge bezieht sich auf den Abstand zwischen dem axial vordersten Punkt der Vorderkante und dem axial hintersten Punkt der Hinterkante zum einen in der betrachteten Seitenansicht und zum anderen unabhängig von der radialen Höhe der Schaufel.

Weitere Ausgestaltungen der Erfindung betreffen den Verlauf der Vorderkantenlinie und der Hinterkantenlinie des Schaufelblatts in der betrachteten Seitenansicht. Die Vorderkantenlinie und die Hinterkantenlinie beschreiben dabei den räumlichen Verlauf der Vorderkante und der Hinterkante in der betrachteten Seitenansicht. Grundsätzlich sind dabei Ausgestaltungen möglich, bei denen die Vorderkantenlinie und/oder die Hinterkantenlinie in der betrachteten Seitenansicht mit oder ohne Wendepunkten realisiert sind.

Eine Ausgestaltung hierzu sieht vor, dass die Vorderkantenlinie des Schaufelblatts in der betrachteten Seitenansicht bezogen auf das entdrehte Schaufelrad keinen Wendepunkt und dabei genau einen lokalen Extremwert aufweist, der gleich dem axial vordersten Punkt ist. Das Schaufelblatt ist an seiner gesamten Vorderkante dementsprechend konkav gewölbt.

Eine weitere Ausgestaltung sieht vor, dass die Vorderkantenlinie des Schaufelblatts in der betrachteten Seitenansicht bezogen auf das entdrehte Schaufelrad mindestens einen Wendepunkt aufweist, an der die Krümmung der Vorderkantenlinie ihr Vorzeichen ändert. Ausführungsvarianten hierzu sehen vor, dass die Vorderkantenlinie des Schaufelblatts einen Wendepunkt und zwei lokale Extremwerte der axialen Position aufweist, oder dass die Vorderkantenlinie des Schaufelblatts zwei Wendepunkte und drei lokale Extremwerte der axialen Position aufweist.

Im Hinblick auf den Verlauf der Hinterkantenlinie sieht eine Ausgestaltung der Erfindung vor, dass die Hinterkantenlinie des Schaufelblatts in der betrachteten Seitenansicht bezogen auf das entdrehte Schaufelrad mindestens einen Wendepunkt aufweist. Gemäß anderen Ausgestaltungen weist die Hinterkantenlinie des Schaufelblatts in der betrachteten Seitenansicht zwei Wendepunkte und zwei oder drei lokale Extremwerte der axialen Position oder drei Wendepunkte und vier lokale Extremwerte der axialen Position aufweist.

Eine Ausgestaltung der Erfindung sieht vor, dass das Schaufelblatt derart ausgelegt ist, dass bei zumindest einer Schwingungsmode das Schaufelblatt an seiner Schaufelspitze in Umfangsrichtung der Rotors schwingt, so dass die Auslenkung an der Vorderkante und an der Hinterkante im Bereich der Schaufelspitze gleich ist. Bevorzugt wird ein solches Schwingungsverhalten für eine Mehrzahl von Moden, beispielsweise vier bis acht Schwingungsmoden realisiert. Durch die vorgesehene Variation der axialen Position von Vorderkante und Hinterkante des Schaufelblatts ist es dabei möglich, dass die Hinterkante der Schaufel in der betrachteten Seitenansicht in bestimmten radialen Bereichen axial nach hinten ausgebuchtet ist, um ein solches Schwingungsverhalten zu erreichen. Dies kann mit einer Zunahme der projizierten Profilsehnenlänge in der Schaufelmitte kombiniert sein. Der genaue Verlauf der Vorderkante und der Hinterkante kann durch Optimierungsverfahren festgelegt werden.

Ein Rotor-Schaufelblatt mit einer vorteilhaften Kombination von Parametern gibt der nebengeordnete Anspruch 15 an.

Gemäß einem weiteren Aspekt der vorliegenden Erfindung stellt diese einen Rotor einer Verdichterstufe einer Strömungsmaschine zur Verfügung, der eine Mehrzahl von Rotor-Schaufelblättern gemäß der vorliegenden Erfindung umfasst. Ein Rotor-Schaufelblatt und ein Schaufelfuß bilden dabei jeweils eine Rotorschaufel.

Dabei sieht eine Ausgestaltung vor, dass der Rotor in integrierter Bauweise, insbesondere in BLISK-Bauweise oder BLING-Bauweise ausgebildet ist. Bei in BLISK-Bauweise ausgeführten Rotoren sind die Rotorscheibe, die Rotornabe und die Laufschaufeln integral (einstückig) ausgebildet sind (BLISK = "Blade Integrated Disk"). Bei in BLING-Bauweise ausgeführten Rotoren sind die Rotornabe und die Laufschaufeln integral (einstückig) ausgebildet sind (BLING = "Blade Integrated Ring"). Im Rahmen dieser Beschreibung werden der Einfachheit halber beide diese Varianten als "BLISK-Bauweise" bezeichnet. In beiden Fällen liegt eine geringe Dämpfung im Übergang zwischen Schaufel und Rotornabe vor, so dass in BLISK-Bauweise ausgebildete Laufräder empfindlicher als herkömmliche Laufräder für eine Schwingungsanregung sind. Die vorliegende Erfindung, die ein Schaufelflattern im Teillastbetrieb verhindert oder reduziert, erzielt besondere Vorteile bei in BLISK-Bauweise ausgebildeten Rotoren.

Eine Ausgestaltung der Erfindung sieht vor, dass der Rotor ein in integrierter Bauweise ausgebildeter Fan ist. Alternativ ist der Rotor beispielsweise ein in integrierter Bauweise ausgebildeter Rotor einer Verdichtereingangsstufe eines Verdichters.

Gemäß einem weiteren Erfindungsaspekt betrifft die Erfindung einen Verdichter mit einem erfindungsgemäßen Rotor, wobei der Verdichter beispielsweise ein Fan, ein Niederdruckverdichter, ein Mitteldruckverdichter oder ein Hochdruckverdichter eines Gasturbinentriebwerks ist.

Gemäß einem weiteren Erfindungsaspekt betrifft die Erfindung eine Schaufel, die neben einem erfindungsgemäßen Schaufelblatt einen Schaufelfuß umfasst.

In einem weiteren Erfindungsaspekt betrifft die Erfindung ein Gasturbinentriebwerk, das aufweist:
- einen Triebwerkskern, der eine Turbine, einen Verdichter und eine die Turbine mit dem Verdichter verbindende, als Hohlwelle ausgebildete Turbinenwelle umfasst;
- einen Fan, der stromaufwärts des Triebwerkskerns positioniert ist, wobei der Fan mehrere Fanschaufeln umfasst; und
- ein Getriebe, das einen Eingang von der Turbinenwelle empfängt und Antrieb für den Fan zum Antreiben des Fans mit einer niedrigeren Drehzahl als die Turbinenwelle abgibt. Dabei sind der Fan und/oder mindestens ein Rotor des Verdichters als Rotor mit in erfindungsgemäßer Weise ausgebildeten Schaufelblättern ausgebildet.

Eine Ausgestaltung hierzu kann vorsehen, dass
- die Turbine eine erste Turbine ist, der Verdichter ein erster Verdichter ist und die Turbinenwelle eine erste Turbinenwelle ist;
- der Triebwerkskern ferner eine zweite Turbine, einen zweiten Verdichter und eine zweite Turbinenwelle, die die zweite Turbine mit dem zweiten Verdichter verbindet, umfasst; und
- die zweite Turbine, der zweite Verdichter und die zweite Turbinenwelle dahingehend angeordnet sind, sich mit einer höheren Drehzahl als die erste Turbinenwelle zu drehen.

Es wird darauf hingewiesen, dass das Rotor-Schaufelblatt in Bezug auf das Koordinatensystem einer Ebene beschrieben ist, die durch die radiale Richtung h und die axiale Richtung x definiert ist, wobei die axiale Richtung durch die Erstreckungsrichtung der Profilsehne in einem betrachteten radial untersten Profilsehnenschnitt des Schaufelblatts definiert ist. Dabei ist die radiale Richtung identisch mit der radialen Richtung einer Strömungsmaschine, in dem das erfindungsgemäße Rotor-Schaufelblatt angeordnet ist. Die wie oben definierte axiale Richtung kann identisch sein mit der durch die Maschinenachse definierten Längsrichtung einer Strömungsmaschine, in dem das erfindungsgemäße Rotor-Schaufelblatt angeordnet ist. Allerdings ist dies nicht notwendigerweise der Fall. Wenn der Schaufelfuß und damit der radial unterste Profilsehnenschnitt verdreht zur Maschinenachse der Strömungsmaschine ausgerichtet ist, so ist die axiale Richtung unterschiedlich von der durch die Maschinenachse definierten Richtung. Die hier erfolgte Definition der axialen Richtung bezogen auf das Rotor-Schaufelblatt hat Gültigkeit unabhängig davon, ob das Rotor-Schaufelblatt gegenüber der Maschinenachse verdreht ist oder nicht. Begriffe wie "vor", "hinter", "vordere" und "hintere" beziehen sich auf die axiale Richtung. Begriffe wie "äußere" oder "innere" beziehen sich auf die radiale Richtung.

Wie hier an anderer Stelle angeführt wird, kann sich die vorliegende Offenbarung auf ein Gasturbinentriebwerk beziehen. Solch ein Gasturbinentriebwerk kann einen Triebwerkskern umfassen, der eine Turbine, einen Brennraum, einen Verdichter und eine die Turbine mit dem Verdichter verbindende Kernwelle umfasst. Solch ein Gasturbinentriebwerk kann ein Gebläse (mit Gebläseschaufeln) umfassen, das stromaufwärts des Triebwerkskerns positioniert ist.

Anordnungen der vorliegenden Offenbarung können insbesondere, jedoch nicht ausschließlich, für Gebläse, die über ein Getriebe angetrieben werden, von Vorteil sein. Entsprechend kann das Gasturbinentriebwerk ein Getriebe umfassen, das einen Eingang von der Kernwelle empfängt und Antrieb für das Gebläse zum Antreiben des Gebläses mit einer niedrigeren Drehzahl als die Kernwelle abgibt. Der Eingang für das Getriebe kann direkt von der Kernwelle oder indirekt von der Kernwelle, beispielsweise über eine Stirnwelle und/oder ein Stirnzahnrad, erfolgen. Die Kernwelle kann mit der Turbine und dem Verdichter starr verbunden sein, so dass sich die Turbine und der Verdichter mit derselben Drehzahl drehen (wobei sich das Gebläse mit einer niedrigeren Drehzahl dreht).

Das Gasturbinentriebwerk, das hier beschrieben und/oder beansprucht wird, kann eine beliebige geeignete allgemeine Architektur aufweisen. Beispielsweise kann das Gasturbinentriebwerk eine beliebige gewünschte Anzahl an Wellen, die Turbinen und Verdichter verbinden, beispielsweise eine, zwei oder drei Wellen, aufweisen. Lediglich beispielhaft kann die mit der Kernwelle verbundene Turbine eine erste Turbine sein, der mit der Kernwelle verbundene Verdichter kann ein erster Verdichter sein und die Kernwelle kann eine erste Kernwelle sein. Der Triebwerkskern kann ferner eine zweite Turbine, einen zweiten Verdichter und eine zweite Kernwelle, die die zweite Turbine mit dem zweiten Verdichter verbindet, umfassen. Die zweite Turbine, der zweite Verdichter und die zweite Kernwelle können dahingehend angeordnet sein, sich mit einer höheren Drehzahl als die erste Kernwelle zu drehen.

Bei solch einer Anordnung kann der zweite Verdichter axial stromabwärts des ersten Verdichters positioniert sein. Der zweite Verdichter kann dahingehend angeordnet sein, Strömung von dem ersten Verdichter aufzunehmen (beispielsweise direkt aufzunehmen, beispielsweise über einen allgemein ringförmigen Kanal).

Das Getriebe kann dahingehend angeordnet sein, von der Kernwelle, die dazu konfiguriert ist, sich (beispielsweise im Gebrauch) mit der niedrigsten Drehzahl zu drehen, (beispielsweise die erste Kernwelle in dem obigen Beispiel) angetrieben zu werden. Beispielsweise kann das Getriebe dahingehend angeordnet sein, lediglich von der Kernwelle, die dazu konfiguriert ist, sich (beispielsweise im Gebrauch) mit der niedrigsten Drehzahl zu drehen, (beispielsweise nur von der ersten Kernwelle und nicht der zweiten Kernwelle bei dem obigen Beispiel) angetrieben zu werden. Alternativ dazu kann das Getriebe dahingehend angeordnet sein, von einer oder mehreren Wellen, beispielsweise der ersten und/oder der zweiten Welle in dem obigen Beispiel, angetrieben zu werden.

Bei einem Gasturbinentriebwerk, das hier beschrieben und/oder beansprucht wird, kann ein Brennraum axial stromabwärts des Gebläses und des Verdichters (der Verdichter) vorgesehen sein. Beispielsweise kann der Brennraum direkt stromabwärts des zweiten Verdichters (beispielsweise an dessen Ausgang) liegen, wenn ein zweiter Verdichter vorgesehen ist. Als ein weiteres Beispiel kann die Strömung am Ausgang des Verdichters dem Einlass der zweiten Turbine zugeführt werden, wenn eine zweite Turbine vorgesehen ist. Der Brennraum kann stromaufwärts der Turbine (der Turbinen) vorgesehen sein.

Der oder jeder Verdichter (beispielsweise der erste Verdichter und der zweite Verdichter gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln, bei denen es sich um variable Statorschaufeln (dahingehend, dass ihr Anstellwinkel variabel sein kann) handeln kann, umfassen. Die Reihe von Rotorschaufeln und die Reihe von Statorschaufeln können axial voneinander versetzt sein.

Die oder jede Turbine (beispielsweise die erste Turbine und die zweite Turbine gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen. Die Reihe von Rotorschaufeln und die Reihe von Statorschaufeln können axial voneinander versetzt sein.

Jede Gebläseschaufel kann mit einer radialen Spannweite definiert sein, die sich von einem Fuß (oder einer Nabe) an einer radial innenliegenden von Gas überströmten Stelle oder an einer Position einer Spannbreite von 0 % zu einer Spitze an einer Position einer Spannbreite von 100 % erstreckt. Das Verhältnis des Radius der Gebläseschaufel an der Nabe zu dem Radius der Gebläseschaufel an der Spitze kann weniger als (oder in der Größenordnung von): 0,4, 0,39, 0,38, 0,37, 0,36, 0,35, 0,34, 0,33, 0,32, 0,31, 0,3, 0,29, 0,28, 0,27, 0,26 oder 0,25 liegen. Das Verhältnis des Radius der Gebläseschaufel an der Nabe zu dem Radius der Gebläseschaufel an der Spitze kann in einem einschließenden Bereich liegen, der von zwei der Werte im vorhergehenden Satz begrenzt wird (d. h. die Werte können obere oder untere Grenzen bilden). Diese Verhältnisse können allgemeinhin als das Nabe-Spitze-Verhältnis bezeichnet werden. Der Radius an der Nabe und der Radius an der Spitze können beide an dem vorderen Randteil (oder dem axial am weitesten vorne liegenden Rand) der Schaufel gemessen werden. Das Nabe-Spitze-Verhältnis bezieht sich natürlich auf den von Gas überströmten Abschnitt der Gebläseschaufel, d. h. den Abschnitt, der sich radial außerhalb jeglicher Plattform befindet.

Der Radius des Gebläses kann zwischen der Mittellinie des Triebwerks und der Spitze der Gebläseschaufel an ihrem vorderen Rand gemessen werden. Der Durchmesser des Gebläses (der einfach das Doppelte des Radius des Gebläses sein kann) kann größer als (oder in der Größenordnung von): 250 cm (etwa 100 Inch), 260 cm, 270 cm (etwa 105 Inch), 280 cm (etwa 110 Inch), 290 cm (etwa 115 Inch), 300 cm (etwa 120 Inch), 310 cm, 320 cm (etwa 125 Inch), 330 cm (etwa 130 Inch), 340 cm (etwa 135 Inch), 350 cm, 360 cm (etwa 140 Inch), 370 cm (etwa 145 Inch), 380 cm (etwa 150 Inch) oder 390 cm (etwa 155 Inch) sein (liegen). Der Gebläsedurchmesser kann in einem einschließenden Bereich liegen, der von zwei der Werte im vorhergehenden Satz begrenzt wird (d. h. die Werte können obere oder untere Grenzen bilden).

Die Drehzahl des Gebläses kann im Gebrauch variieren. Allgemein ist die Drehzahl geringer für Gebläse mit einem größeren Durchmesser. Lediglich als ein nicht einschränkendes Beispiel kann die Drehzahl des Gebläses bei Konstantgeschwindigkeitsbedingungen weniger als 2500 U/min, beispielsweise weniger als 2300 U/min, betragen. Lediglich als ein weiteres nicht einschränkendes Beispiel kann auch die Drehzahl des Gebläses bei Konstantgeschwindigkeitsbedingungen für ein Triebwerk mit einem Gebläsedurchmesser im Bereich von 250 cm bis 300 cm (beispielsweise 250 cm bis 280 cm) im Bereich von 1700 U/min bis 2500 U/min, beispielsweise im Bereich von 1800 U/min bis 2300 U/min, beispielsweise im Bereich von 1900 U/min bis 2100 U/min, liegen. Lediglich als ein weiteres nicht einschränkendes Beispiel kann die Drehzahl des Gebläses bei Konstantgeschwindigkeitsbedingungen für ein Triebwerk mit einem Gebläsedurchmesser im Bereich von 320 cm bis 380 cm in dem Bereich von 1200 U/min bis 2000 U/min, beispielsweise in dem Bereich von 1300 U/min bis 1800 U/min, beispielsweise in dem Bereich von 1400 U/min bis 1600 U/min, liegen.

Im Gebrauch des Gasturbinentriebwerks dreht sich das Gebläse (mit zugehörigen Gebläseschaufeln) um eine Drehachse. Diese Drehung führt dazu, dass sich die Spitze der Gebläseschaufel mit einer Geschwindigkeit U_{Spitze} bewegt. Die von den Gebläseschaufeln an der Strömung verrichtete Arbeit resultiert in einem Anstieg der Enthalpie dH der Strömung. Eine Gebläsespitzenbelastung kann als dH/U_{Spitze}² definiert werden, wobei dH der Enthalpieanstieg (beispielsweise der durchschnittliche 1-D-Enthalpieanstieg) über das Gebläse hinweg ist und U_{Spitze} die (Translations-) Geschwindigkeit der Gebläsespitze, beispielsweise an dem vorderen Rand der Spitze, ist (die als Gebläsespitzenradius am vorderen Rand multipliziert mit der Winkelgeschwindigkeit definiert werden kann). Die Gebläsespitzenbelastung bei Konstantgeschwindigkeitsbedingungen kann mehr als (oder in der Größenordnung von): 0,3, 0,31, 0,32, 0,33, 0,34, 0,35, 0,36, 0,37, 0,38, 0,39 oder 0,4 betragen (liegen) (wobei alle Einheiten in diesem Abschnitt Jkg⁻¹K⁻¹/(ms⁻¹)² sind). Die Gebläsespitzenbelastung kann in einem einschließenden Bereich liegen, der von zwei der Werte im vorhergehenden Satz begrenzt wird (d. h. die Werte können obere oder untere Grenzen bilden).

Gasturbinentriebwerke gemäß der vorliegenden Offenbarung können ein beliebiges gewünschtes Bypassverhältnis aufweisen, wobei das Bypassverhältnis als das Verhältnis des Massendurchsatzes der Strömung durch den Bypasskanal zu dem Massendurchsatz der Strömung durch den Kern bei Konstantgeschwindigkeitsbedingungen definiert wird. Bei einigen Anordnungen kann das Bypassverhältnis mehr als (in der Größenordnung von): 10, 10,5, 11, 11,5, 12, 12,5, 13, 13,5, 14, 14,5, 15, 15,5, 16, 16,5 oder 17 betragen (liegen). Das Bypassverhältnis kann in einem einschließenden Bereich liegen, der von zwei der Werte im vorhergehenden Satz begrenzt wird (d. h. die Werte können obere oder untere Grenzen bilden). Der Bypasskanal kann im Wesentlichen ringförmig sein. Der Bypasskanal kann sich radial außerhalb des Triebwerkskerns befinden. Die radial äußere Fläche des Bypasskanals kann durch eine Triebwerksgondel und/oder ein Gebläsegehäuse definiert werden.

Das Gesamtdruckverhältnis eines Gasturbinentriebwerks, das hier beschrieben und/oder beansprucht wird, kann als das Verhältnis des Staudrucks stromaufwärts des Gebläses zu dem Staudruck am Ausgang des Höchstdruckverdichters (vor dem Eingang in den Brennraum) definiert werden. Als ein nicht einschränkendes Beispiel kann das Gesamtdruckverhältnis eines Gasturbinentriebwerks, das hier beschrieben und/oder beansprucht wird, bei Konstantgeschwindigkeit mehr als (oder in der Größenordnung von): 35, 40, 45, 50, 55, 60, 65, 70, 75 betragen (liegen). Das Gesamtdruckverhältnis kann in einem einschließenden Bereich liegen, der von zwei der Werte im vorhergehenden Satz begrenzt wird (d. h. die Werte können obere oder untere Grenzen bilden).

Der spezifische Schub eines Triebwerks kann als der Nettoschub des Triebwerks dividiert durch den Gesamtmassenstrom durch das Triebwerk hindurch definiert werden. Bei Konstantgeschwindigkeitsbedingungen kann der spezifische Schub eines Triebwerks, das hier beschrieben und/oder beansprucht wird, weniger als (oder in der Größenordnung von): 110 Nkg⁻¹s, 105 Nkg⁻¹s, 100 Nkg⁻¹s, 95 Nkg⁻¹s, 90 Nkg⁻¹s, 85 Nkg⁻¹s oder 80 Nkg⁻¹s betragen (liegen). Der spezifische Schub kann in einem einschließenden Bereich liegen, der von zwei der Werte im vorhergehenden Satz begrenzt wird (d. h. die Werte können obere oder untere Grenzen bilden). Solche Triebwerke können im Vergleich zu herkömmlichen Gasturbinentriebwerken besonders effizient sein.

Ein Gasturbinentriebwerk, das hier beschrieben und/oder beansprucht wird, kann einen beliebigen gewünschten Höchstschub aufweisen. Lediglich als ein nicht einschränkendes Beispiel kann eine Gasturbine, die hier beschrieben und/oder beansprucht wird, zur Erzeugung eines Höchstschubs von mindestens (oder in der Größenordnung von): 160kN, 170kN, 180kN, 190kN, 200kN, 250kN, 300kN, 350kN, 400kN, 450kN, 500kN oder 550kN in der Lage sein. Der Höchstschub kann in einem einschließenden Bereich liegen, der von zwei der Werte im vorhergehenden Satz begrenzt wird (d. h. die Werte können obere oder untere Grenzen bilden). Der Schub, auf den oben Bezug genommen wird, kann der Nettohöchstschub bei standardmäßigen atmosphärischen Bedingungen auf Meereshöhe plus 15 Grad C (Umgebungsdruck 101,3 kPa, Temperatur 30 Grad C) bei statischem Triebwerk sein.

Im Gebrauch kann die Temperatur der Strömung am Eingang der Hochdruckturbine besonders hoch sein. Diese Temperatur, die als TET bezeichnet werden kann, kann an dem Ausgang zum Brennraum, beispielsweise unmittelbar stromaufwärts der ersten Turbinenschaufel, die wiederum als eine Düsenleitschaufel bezeichnet werden kann, gemessen werden. Bei Konstantgeschwindigkeit kann die TET mindestens (oder in der Größenordnung von): 1400K, 1450K, 1500K, 1550K, 1600K oder 1650K betragen (liegen). Die TET bei Konstantgeschwindigkeit kann in einem einschließenden Bereich liegen, der von zwei der Werte im vorhergehenden Satz begrenzt wird (d. h. die Werte können obere oder untere Grenzen bilden). Die maximale TET im Gebrauch des Triebwerks kann beispielsweise mindestens (oder in der Größenordnung von): 1700K, 1750K, 1800K, 1850K, 1900K, 1950K oder 2000K betragen (liegen). Die maximale TET kann in einem einschließenden Bereich liegen, der von zwei der Werte im vorhergehenden Satz begrenzt wird (d. h. die Werte können obere oder untere Grenzen bilden). Die maximale TET kann beispielsweise bei einer Bedingung von hohem Schub, beispielsweise bei einer MTO-Bedingung (MTO - Maximum Take-Off thrust - maximaler Startschub), auftreten.

Eine Gebläseschaufel und/oder ein Blattabschnitt einer Gebläseschaufel, die hier beschrieben und/oder beansprucht wird, kann aus einem beliebigen geeigneten Material oder einer Kombination aus Materialien hergestellt werden. Beispielsweise kann zumindest ein Teil der Gebläseschaufel und/oder des Blatts zumindest zum Teil aus einem Verbundstoff, beispielsweise einem Metallmatrix-Verbundstoff und/oder einem Verbundstoff mit organischer Matrix, wie z. B. Kohlefaser, hergestellt werden. Als ein weiteres Beispiel kann zumindest ein Teil der Gebläseschaufel und/oder des Blatts zumindest zum Teil aus einem Metall, wie z. B. einem auf Titan basierendem Metall oder einem auf Aluminium basierenden Material (wie z. B. einer Aluminium-Lithium-Legierung) oder einem auf Stahl basierenden Material hergestellt werden. Die Gebläseschaufel kann mindestens zwei Bereiche umfassen, die unter Verwendung verschiedener Materialien hergestellt werden. Beispielsweise kann die Gebläseschaufel einen vorderen Schutzrand aufweisen, der unter Verwendung eines Materials hergestellt wird, das dem Aufschlagen (beispielsweise von Vögeln, Eis oder anderem Material) besser widerstehen kann als der Rest der Schaufel. Solch ein vorderer Rand kann beispielsweise unter Verwendung von Titan oder einer auf Titan basierenden Legierung hergestellt werden. Somit kann die Gebläseschaufel lediglich als ein Beispiel einen auf Kohlefaser oder Aluminium basierenden Körper (wie z. B. eine Aluminium-Lithium-Legierung) mit einem vorderen Rand aus Titan aufweisen.

Ein Gebläse, das hier beschrieben und/oder beansprucht wird, kann einen mittleren Abschnitt umfassen, von dem sich die Gebläseschaufeln, beispielsweise in einer radialen Richtung, erstrecken können. Die Gebläseschaufeln können auf beliebige gewünschte Art und Weise an dem mittleren Abschnitt angebracht sein. Beispielsweise kann jede Gebläseschaufel eine Fixierungsvorrichtung umfassen, die mit einem entsprechenden Schlitz in der Nabe (oder Scheibe) in Eingriff gelangen kann. Lediglich als ein Beispiel kann solch eine Fixierungsvorrichtung in Form eines Schwalbenschwanzes vorliegen, der zur Fixierung der Gebläseschaufel an der Nabe/Scheibe in einen entsprechenden Schlitz in der Nabe/Scheibe eingesteckt und/oder damit in Eingriff gebracht werden kann. Als ein weiteres Beispiel können die Gebläseschaufeln integral mit einem mittleren Abschnitt ausgebildet sein. Solch eine Anordnung kann als eine Blisk oder ein Bling bezeichnet werden. Ein beliebiges geeignetes Verfahren kann zur Herstellung solch einer Blisk oder solch eines Bling verwendet werden. Beispielsweise kann zumindest ein Teil der Gebläseschaufeln aus einem Block maschinell herausgearbeitet werden und/oder mindestens ein Teil der Gebläseschaufeln kann durch Schweißen, wie z. B. lineares Reibschweißen, an der Nabe/Scheibe angebracht werden.

Die Gasturbinentriebwerke, die hier beschrieben und/oder beansprucht werden, können oder können nicht mit einer VAN (Variable Area Nozzle - Düse mit variablem Querschnitt) versehen sein. Solch eine Düse mit variablem Querschnitt kann eine Variation des Ausgangsquerschnitts des Bypasskanals im Gebrauch gestatten. Die allgemeinen Prinzipien der vorliegenden Offenbarung können auf Triebwerke mit oder ohne eine VAN zutreffen.

Das Gebläse einer Gasturbine, die hier beschrieben und/oder beansprucht wird, kann eine beliebige gewünschte Anzahl an Gebläseschaufeln, beispielsweise 16, 18, 20, 22 oder 24 Gebläseschaufeln, aufweisen.

Gemäß der hier erfolgenden Verwendung können Konstantgeschwindigkeitsbedingungen Konstantgeschwindigkeitsbedingungen eines Luftfahrzeugs, an dem das Gasturbinentriebwerk angebracht ist, bedeuten. Solche Konstantgeschwindigkeitsbedingungen können herkömmlicherweise als die Bedingungen während des mittleren Teils des Flugs definiert werden, beispielsweise die Bedingungen, denen das Luftfahrzeug und/oder das Triebwerk zwischen (hinsichtlich Zeit und/oder Entfernung) dem Ende des Steigflugs und dem Beginn des Sinkflugs ausgesetzt wird bzw. werden.

Lediglich als ein Beispiel kann die Vorwärtsgeschwindigkeit bei der Konstantgeschwindigkeitsbedingung bei einem beliebigen Punkt im Bereich von Mach 0,7 bis 0,9, beispielsweise 0,75 bis 0,85, beispielsweise 0,76 bis 0,84, beispielsweise 0,77 bis 0,83, beispielsweise 0,78 bis 0,82, beispielsweise 0,79 bis 0,81, beispielsweise in der Größenordnung von Mach 0,8, in der Größenordnung von Mach 0,85 oder in dem Bereich von 0,8 bis 0,85 liegen. Eine beliebige Geschwindigkeit innerhalb dieser Bereiche kann die Konstantfahrtbedingung sein. Bei einigen Luftfahrzeugen können die Konstantfahrtbedingungen außerhalb dieser Bereiche, beispielsweise unter Mach 0,7 oder über Mach 0,9, liegen.

Lediglich als ein Beispiel können die Konstantgeschwindigkeitsbedingungen standardmäßigen atmosphärischen Bedingungen bei einer Höhe, die im Bereich von 10.000 m bis 15.000 m, beispielsweise im Bereich von 10.000 m bis 12.000 m, beispielsweise im Bereich von 10.400 m bis 11.600 m (etwa 38.000 Fuß) beispielsweise im Bereich von 10.500 m bis 11.500 m, beispielsweise im Bereich von 10.600 m bis 11.400 m, beispielsweise im Bereich von 10.700 m (etwa 35.000 Fuß) bis 11.300 m, beispielsweise im Bereich von 10.800 m bis 11.200 m, beispielsweise im Bereich von 10.900 m bis 11.100 m, beispielsweise in der Größenordnung von 11.000 m, liegt, entsprechen. Die Konstantgeschwindigkeitsbedingungen können standardmäßigen atmosphärischen Bedingungen bei einer beliebigen gegebenen Höhe in diesen Bereichen entsprechen.

Lediglich als ein Beispiel können die Konstantgeschwindigkeitsbedingungen Folgendem entsprechen: einer Vorwärts-Mach-Zahl von 0,8; einem Druck von 23.000 Pa und einer Temperatur von -55 Grad C.

So wie sie hier durchweg verwendet werden, können "Konstantgeschwindigkeit" oder "Konstantgeschwindigkeitsbedingungen" den aerodynamischen Auslegungspunkt bedeuten. Solch ein aerodynamischer Auslegungspunkt (oder ADP - Aerodynamic Design Point) kann den Bedingungen (darunter beispielsweise die Mach-Zahl, Umgebungsbedingungen und Schubanforderung), für die der Gebläsebetrieb ausgelegt ist, entsprechen. Dies kann beispielsweise die Bedingungen, bei denen das Gebläse (oder das Gasturbinentriebwerk) konstruktionsgemäß den optimalen Wirkungsgrad aufweist, bedeuten.

Im Gebrauch kann ein Gasturbinentriebwerk, das hier beschrieben und/oder beansprucht wird, bei den Konstantgeschwindigkeitsbedingungen, die hier an anderer Stelle definiert werden, betrieben werden. Solche Konstantgeschwindigkeitsbedingungen können von den Konstantgeschwindigkeitsbedingungen (beispielsweise den Bedingungen während des mittleren Teils des Fluges) eines Luftfahrzeugs, an dem mindestens ein (beispielsweise 2 oder 4) Gasturbinentriebwerk zur Bereitstellung von Schubkraft befestigt sein kann, bestimmt werden.

Für den Fachmann ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen. Des Weiteren kann ein beliebiges Merkmal oder ein beliebiger Parameter, das bzw. der hier beschrieben wird, bei einem beliebigen Aspekt angewendet werden und/oder mit einem beliebigen anderen Merkmal oder Parameter, das bzw. der hier beschrieben wird, kombiniert werden, sofern sie sich nicht gegenseitig ausschließen.

Die Erfindung wird nachfolgend unter Bezugnahme auf die Figuren der Zeichnung anhand mehrerer Ausführungsbeispiele näher erläutert. Es zeigen:
- Figur 1: eine Seitenschnittansicht eines Gasturbinentriebwerks;
- Figur 2: eine Seitenschnittgroßansicht eines stromaufwärtigen Abschnitts eines Gasturbinentriebwerks;
- Figur 3: eine zum Teil weggeschnittene Ansicht eines Getriebes für ein Gasturbinentriebwerk;
- Figur 4: den geometrischen Aufbau und Basisbezeichnungen an einem Rotorgitter;
- Figur 5: in Seitenansicht schematisch mehrere Varianten eines entdrehten Schaufelblatts, das an der Vorderkante und an der Hinterkante gerade oder geschwungen ausgebildet ist,
- Figur 6: schematisch eine Ansicht von oben auf ein verdrehtes Schaufelblatt, wobei eine Vielzahl von Profilsehnenschnitten des Schaufelblatts dargestellt sind, die entsprechend der Verdrehung des Schaufelblatts übereinander angeordnet sind;
- Figur 7: in Seitenansicht ein erstes Ausführungsbeispiel eines Rotor-Schaufelblatts, bei dem die axiale Position der Vorderkante und die axiale Position der Hinterkante abhängig von der Schaufelhöhe variieren;
- Figur 8: in Seitenansicht ein zweites Ausführungsbeispiel eines Rotor-Schaufelblatts, bei dem die axiale Position der Vorderkante und die axiale Position der Hinterkante abhängig von der Schaufelhöhe variieren;
- Figur 9: in Seitenansicht ein drittes Ausführungsbeispiel eines Rotor-Schaufelblatts, bei dem die axiale Position der Vorderkante und die axiale Position der Hinterkante abhängig von der Schaufelhöhe variieren;
- Figur 10: schematisch die gleichzeitige Darstellung eines Rotor-Schaufelblatts gemäß dem Stand der Technik und eines Rotor-Schaufelblatts mit einer Hinterkantenlinie, deren axiale Position variiert; und
- Figur 11: die Variation der Profilsehnenlänge in Abhängigkeit von der Schaufelhöhe für ein Rotor-Schaufelblatt mit geraden Schaufelkanten, ein Rotor-Schaufelblatt mit einer geschwungenen Vorderkante und ein Rotor-Schaufelblatt mit einer geschwungener Vorderkante und einer geschwungener Hinterkante.

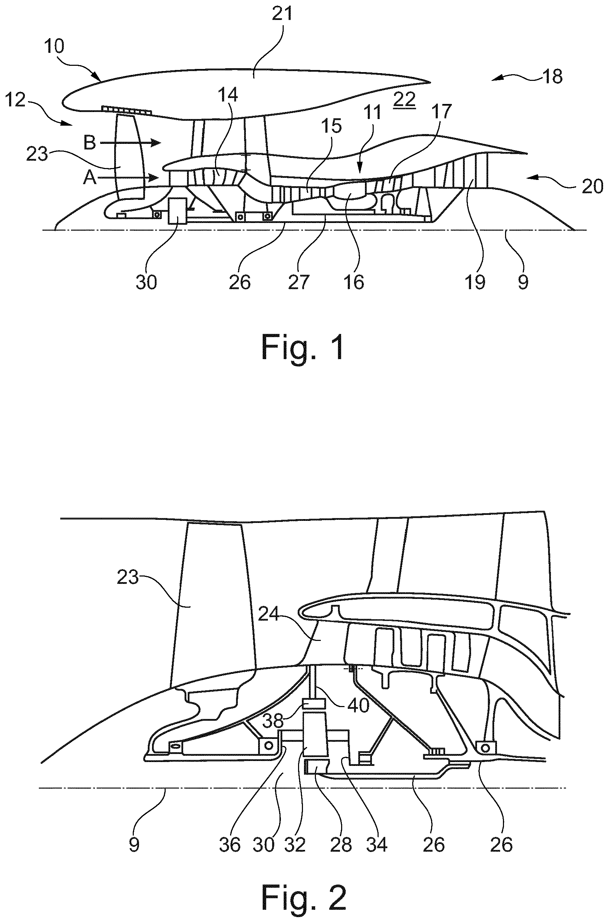

Figur 1 stellt ein Gasturbinentriebwerk 10 mit einer Hauptdrehachse 9 dar. Das Triebwerk 10 umfasst einen Lufteinlass 12 und ein Schubgebläse bzw. Fan 23, das zwei Luftströme erzeugt: einen Kernluftstrom A und einen Bypassluftstrom B. Das Gasturbinentriebwerk 10 umfasst einen Kern 11, der den Kernluftstrom A aufnimmt. Der Triebwerkskern 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Das Gebläse 23 ist über eine Welle 26 und ein Epizykloidengetriebe 30 an der Niederdruckturbine 19 angebracht und wird durch diese angetrieben.

Im Gebrauch wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an. Das Gebläse 23 stellt allgemein den Hauptteil der Schubkraft bereit. Das Epizykloidengetriebe 30 ist ein Untersetzungsgetriebe.

Eine beispielhafte Anordnung für ein Getriebegebläse-Gasturbinentriebwerk 10 wird in Figur 2 gezeigt. Die Niederdruckturbine 19 (siehe Figur 1) treibt die Welle 26 an, die mit einem Sonnenrad 28 der Epizykloidengetriebeanordnung 30 gekoppelt ist. Mehrere Planetenräder 32, die durch einen Planetenträger 34 miteinander gekoppelt sind, befinden sich von dem Sonnenrad 28 radial außen und kämmen damit. Der Planetenträger 34 beschränkt die Planetenräder 32 darauf, synchron um das Sonnenrad 28 zu kreisen, während er ermöglicht, dass sich jedes Planetenrad 32 um seine eigene Achse drehen kann. Der Planetenträger 34 ist über Gestänge 36 mit dem Gebläse 23 dahingehend gekoppelt, seine Drehung um die Triebwerksachse 9 anzutreiben. Ein Außenrad oder Hohlrad 38, das über Gestänge 40 mit einer stationären Stützstruktur 24 gekoppelt ist, befindet sich von den Planetenrädern 32 radial außen und kämmt damit.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht das Gebläse 23 umfassen) und/oder die Turbinen- und Verdichterstufe, die durch die Verbindungswelle 26 mit der niedrigsten Drehzahl in dem Triebwerk (d. h. dass sie nicht die Getriebeausgangswelle, die das Gebläse 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann das Gebläse 23 als eine erste Verdichtungsstufe oder Verdichtungsstufe mit dem niedrigsten Druck bezeichnet werden.

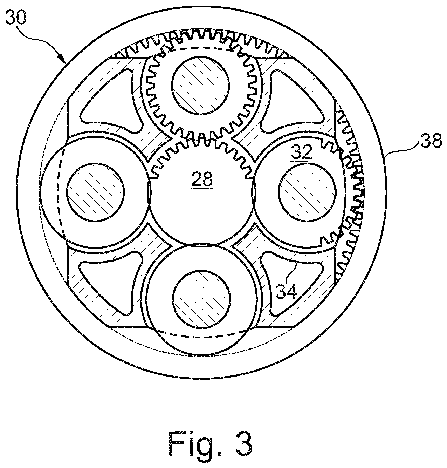

Das Epizykloidengetriebe 30 wird in Figur 3 beispielhaft genauer gezeigt. Das Sonnenrad 28, die Planetenräder 32 und das Hohlrad 38 umfassen jeweils Zähne um ihre Peripherie zum Kämmen mit den anderen Zahnrädern. Jedoch werden der Übersichtlichkeit halber lediglich beispielhafte Abschnitte der Zähne in Figur 3 dargestellt. Obgleich vier Planetenräder 32 dargestellt werden, liegt für den Fachmann auf der Hand, dass innerhalb des Schutzumfangs der beanspruchten Erfindung mehr oder weniger Planetenräder 32 vorgesehen sein können. Praktische Anwendungen eines Epizykloidengetriebes 30 umfassen allgemein mindestens drei Planetenräder 32.

Das in Figur 2 und 3 beispielhaft dargestellte Epizykloidengetriebe 30 ist ein Planetengetriebe, bei dem der Planetenträger 34 über Gestänge 36 mit einer Ausgangswelle gekoppelt ist, wobei das Hohlrad 38 festgelegt ist. Jedoch kann eine beliebige andere geeignete Art von Epizykloidengetriebe 30 verwendet werden. Als ein weiteres Beispiel kann das Epizykloidengetriebe 30 eine Sternanordnung sein, bei der der Planetenträger 34 festgelegt gehalten wird, wobei gestattet wird, dass sich das Hohlrad (oder Außenrad) 38 dreht. Bei solch einer Anordnung wird das Gebläse 23 von dem Hohlrad 38 angetrieben. Als ein weiteres alternatives Beispiel kann das Getriebe 30 ein Differenzialgetriebe sein, bei dem gestattet wird, dass sich sowohl das Hohlrad 38 als auch der Planetenträger 34 drehen.

Es versteht sich, dass die in Figur 2 und 3 gezeigte Anordnung lediglich beispielhaft ist und verschiedene Alternativen in dem Schutzumfang der vorliegenden Offenbarung liegen. Lediglich beispielhaft kann eine beliebige geeignete Anordnung zur Positionierung des Getriebes 30 in dem Triebwerk 10 und/oder zur Verbindung des Getriebes 30 mit dem Triebwerk 10 verwendet werden. Als ein weiteres Beispiel können die Verbindungen (z. B. die Gestänge 36, 40 in dem Beispiel von Figur 2) zwischen dem Getriebe 30 und anderen Teilen des Triebwerks 10 (wie z. B. der Eingangswelle 26, der Ausgangswelle und der festgelegten Struktur 24) einen gewissen Grad an Steifigkeit oder Flexibilität aufweisen. Als ein weiteres Beispiel kann eine beliebige geeignete Anordnung der Lager zwischen rotierenden und stationären Teilen des Triebwerks (beispielsweise zwischen der Eingangs- und der Ausgangswelle des Getriebes und den festgelegten Strukturen, wie z. B. dem Getriebegehäuse) verwendet werden, und die Offenbarung ist nicht auf die beispielhafte Anordnung von Figur 2 beschränkt. Beispielsweise ist für den Fachmann ohne Weiteres erkenntlich, dass sich die Anordnung von Ausgang und Stützgestängen und Lagerpositionierungen bei einer Sternanordnung (oben beschrieben) des Getriebes 30 in der Regel von jenen, die beispielhaft in Figur 2 gezeigt werden, unterscheiden würden.

Entsprechend dehnt sich die vorliegende Offenbarung auf ein Gasturbinentriebwerk mit einer beliebigen Anordnung der Getriebearten (beispielsweise sternförmig oder planetenartig), Stützstrukturen, Eingangs- und Ausgangswellenanordnung und Lagerpositionierungen aus.

Optional kann das Getriebe Neben- und/oder alternative Komponenten (z. B. den Mitteldruckverdichter und/oder einen Nachverdichter) antreiben.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und/oder Turbinen und/oder eine alternative Anzahl an Verbindungswellen aufweisen. Als ein weiteres Beispiel weist das in Figur 1 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch- oder Teilungsstrom) kann einen festgelegten oder variablen Bereich aufweisen. Obgleich sich das beschriebene Beispiel auf ein Turbogebläsetriebwerk bezieht, kann die Offenbarung beispielsweise bei einer beliebigen Art von Gasturbinentriebwerk, wie z. B. bei einem Open-Rotor- (bei dem die Gebläsestufe nicht von einer Triebwerksgondel umgeben wird) oder einem Turboprop-Triebwerk, angewendet werden. Bei einigen Anordnungen umfasst das Gasturbinentriebwerk 10 möglicherweise kein Getriebe 30.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Figur 1) und eine Umfangsrichtung (senkrecht zu der Ansicht in Figur 1) umfasst. Die axiale, die radiale und die Umfangsrichtung verlaufen senkrecht zueinander.

Im Kontext der vorliegenden Erfindung ist die Ausbildung der Schaufelblätter der Rotoren von Bedeutung. Die Erfindung ist dabei grundsätzlich bei den Schaufelblättern eines Fans und/oder bei den Schaufelblättern eines oder mehrerer der Rotoren eines Niederdruckverdichters, eines Mitteldruckverdichters (sofern vorhanden) und/oder eines Hochdruckverdichter einsetzbar.

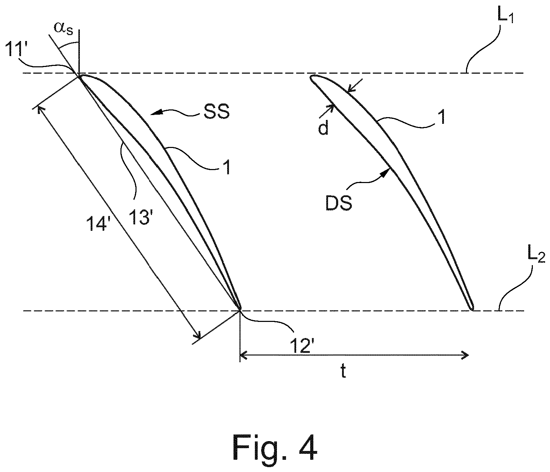

Zunächst wird dabei anhand der Figur 4 der grundlegende Aufbau eines Rotorgitters beschrieben. Das Rotorgitter ist in üblicher Darstellung im Meridianschnitt und abgerollt dargestellt. Es umfasst eine Mehrzahl von Schaufelblättern 1, die jeweils eine Vorderkante 11' und eine Hinterkante 12' aufweisen. Die Vorderkanten 11' liegen auf einer gedachten Linie L₁, die Hinterkanten 12' liegen auf einer gedachten Linie L₂. Die Linien L₁ und L₂ verlaufen parallel. Die Schaufelblätter 1 umfassen des Weiteren jeweils eine Saugseite SS und eine Druckseite DS. Ihre maximale Profildicke ist mit d angegeben.

Das Rotorgitter weist eine Gitterteilung t und jede der Schaufelblätter 1 eine Profilsehne 13' mit einer Profilsehnenlänge 14' auf. Die Profilsehne 13' ist die Verbindungslinie zwischen der Vorderkante 11' und der Hinterkante 12' des Profils. Zwischen der Profilsehne 13' und der Senkrechten auf der Linie L₁ ist der Schaufel-Staffelungswinkel αₛ gebildet. Der Staffelungswinkel αₛ gibt die Neigung der Schaufelblätter 1 an. Die Profilsehne 13' und die Profilsehnenlänge 14' werden nachfolgend auch als tatsächliche Profilsehne 13' und tatsächliche Profilsehnenlänge 14' bezeichnet, in Abgrenzung zu einer projizierte Profilsehne und einer projizierten Profilsehnenlänge, die in einer Seitenansicht vorliegen.

So wird im folgenden eines der Schaufelblätter 1 eines Rotors in einer Seitenansicht betrachtet, wobei jedes der Schaufelblätter des Rotors oder zumindest einige der Schaufelblätter des Rotors in der beschriebenen Weise ausgebildet sind.

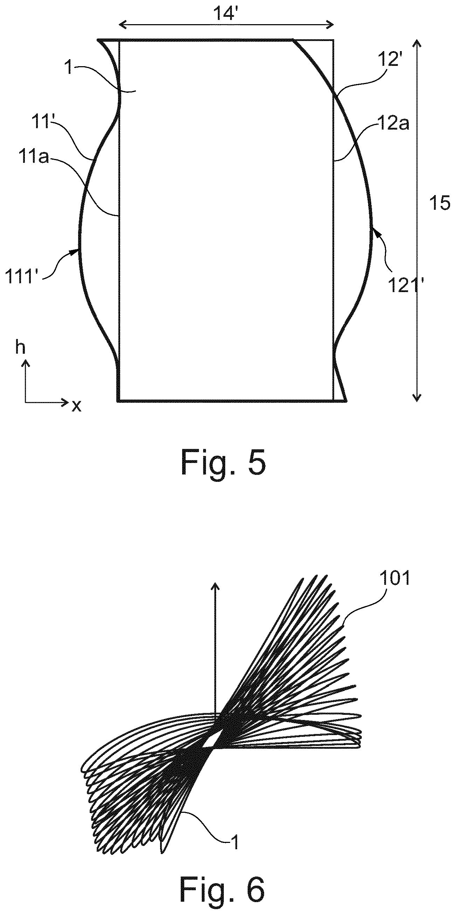

Die Figur 6 zeigt in schematischer Darstellung ein verdrehtes Schaufelblatt, wie es typischerweise Einsatz findet. In der Darstellung der Figur 6 sind dabei eine Mehrzahl von Profilsehnenschnitten 101 eines Schaufelblatts 1 dargestellt, die in unterschiedlicher Höhe h des Schaufelblattes vorgenommen und entsprechend der Verdrehung des Schaufelblatts 1 übereinander dargestellt sind. Ein Profilsehnenschnitt 101 erfolgt in einer Ebene, in der alle Punkte die gleiche radiale Höhe h aufweisen. In jedem Profilsehnenschnitt 101 verläuft die Profilsehne in einer anderen Richtung.

Die Figur 5 zeigt in schematischer Darstellung ein Schaufelblatt 1, das in herkömmlicher Weise eine Vorderkante 11a und eine Hinterkante 12a aufweist, die sich geradlinig erstrecken, so dass die Profilsehnenlänge 14', die dem Abstand zwischen der Vorderkante 11a und der Hinterkante 12a entspricht, über der Höhe 15 des Schaufelblatts 1 im Wesentlichen konstant ist.

Die Darstellung der Figur 5 ist dabei derart gewählt, dass das entdrehte Schaufelblatt betrachtet wird, bei dem die Profilsehnenschnitte 101 (vgl. Figur 6) derart übereinander gedreht sind, dass die Profilsehnen der Profilsehnenschnitte 101 in einer Ebene angeordnet sind. In der betrachteten Ebene gibt die x-Achse die axiale Erstreckung des Schaufelblatts und die y-Achse die radiale Höhe h des Schaufelblatts an.

Die Figur 5 zeigt des Weiteren eine erste Variation, bei der die Vorderkante 11' nicht geradlinig verläuft, sondern gekrümmt ausgebildet ist und dabei in der betrachteten Projektion bzw. Seitenansicht einen Punkt 111' ausbildet, an dem sie sich maximal axial nach vorne erstreckt. Rotoren mit Laufschaufeln, deren Vorderkante gekrümmt ausgebildet ist, sind bei Fanschaufeln bekannt und werden auch als "Swept Fan"-Schaufeln bezeichnet.

Die Figur 5 zeigt weiter eine zweite Variation, bei der zusätzlich zur Vorderkante auch die Hinterkante 12' gekrümmt ausgebildet ist und dabei in der betrachteten Seitenansicht einen Punkt 121' ausbildet, an dem sie sich maximal axial nach hinten erstreckt. Gemäß dieser Variation ist somit die Profilsehnenlänge an der Hinterkante 12' nach hinten verlängert.

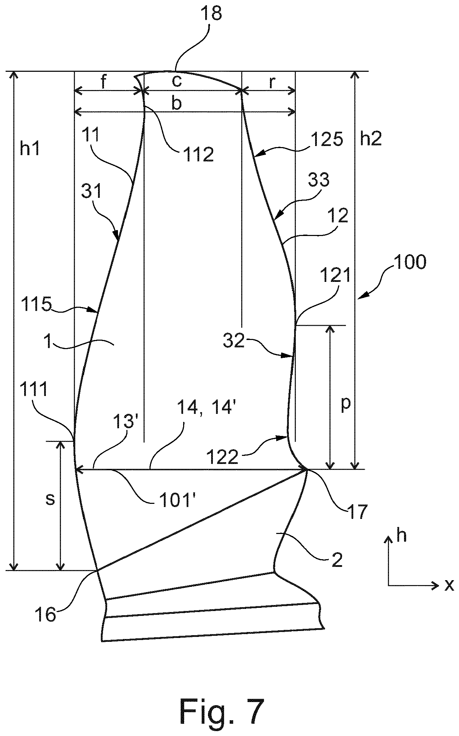

Die Figuren 7 bis 9 zeigen ein entsprechend der Figur 6 verdrehtes Schaufelblatt 1 in einer Seitenansicht, d. h. in einer Orthogonalprojektion des Schaufelblattes 1 in die Ebene einer Seitenansicht. Der Vorteil einer Darstellung des Schaufelblatts 1 in Seitenansicht besteht darin, dass die relativen Verhältnisse der Variation von Vorderkante und Hinterkante des Schaufelblatts 1 unabhängig von der Auslegung des Rotors gelten. Denn je nach Auslegung des Rotors für eine bestimmte Drehzahl können sich die tatsächlichen Profilsehnenlängen bei unterschiedlichen Rotoren ändern.

Die Ebene der Seitenansicht ist wie folgt definiert. Sie besitzt eine radiale Richtung h, die der radialen Erstreckung des Schaufelblatts entspricht. Eine axiale Richtung des Schaufelblatts ist dadurch definiert, dass sie senkrecht zu der radialen Richtung h und dabei in Richtung der Hinterkante verläuft. Da bei einem verdrehten Schaufelblatt entsprechend der Figur 6 in jedem Profilsehnenschnitt die Profilsehne in einer anderen Richtung verläuft, ist es zur Definition einer eindeutigen axialen Richtung erforderlich, einen bestimmten Profilsehnenschnitt für die Definition der axialen Richtung auszuwählen. Vorliegend wird der radial unterste Profilsehnenschnitt betrachtet, wie anhand der Figur 7 noch näher erläutert werden wird.

Die Figur 7 zeigt ein Ausführungsbeispiel eines Rotor-Schaufelblatts 1, bei dem sowohl die projizierte Vorderkante 11 als auch die projizierte Hinterkante 12 (nachfolgend nur noch als Vorderkante 11 und als Hinterkante 12 bezeichnet) in axialer Richtung x über der Höhe h variieren. Die Vorderkante 11 bildet eine Vorderkantenlinie 115 aus, die den räumlichen Verlauf der Vorderkante 11 in der betrachteten Seitenansicht beschreibt. Die Hinterkante 12 bildet eine Hinterkantenlinie 125 aus, die den räumlichen Verlauf der Hinterkante 12 in der betrachteten Seitenansicht beschreibt.

Das Schaufelblatt 1 bildet den aerodynamisch wirksamen Teil einer Schaufel 100, die neben dem Schaufelblatt 1 einen Schaufelfuß 2 umfasst. Der Schaufelfuß 2 ist mit einer Rotorscheibe verbunden oder integral mit einer solchen ausgebildet. An seinem oberen Ende bildet das Schaufelblatt 1 eine Schaufelspitze 18 aus.

An der Vorderkante 11 weist das Schaufelblatt 1 eine Gesamthöhe h1 auf. An der Hinterkante 12 weist das Schaufelblatt 1 eine Gesamthöhe h2 auf. Dabei unterscheiden sich die Gesamthöhen h1, h2 an der Vorderkante 11 und der Hinterkante 12 aufgrund einer in axialer Richtung zunehmenden Höhe des Schaufelfußes 2. Dabei bildet das Schaufelblatt 1 an der Vorderkante 11 einen vorderen Fußpunkt 16 aus, von dem aus es sich an der Vorderkante 11 von dem Schaufelfuß 2 erstreckt. In entsprechender Weise bildet das Schaufelblatt an der Hinterkante 12 einen hinteren Fußpunkt 17 aus, von dem aus es sich an der Hinterkante 12 von dem Schaufelfu β 2 erstreckt.

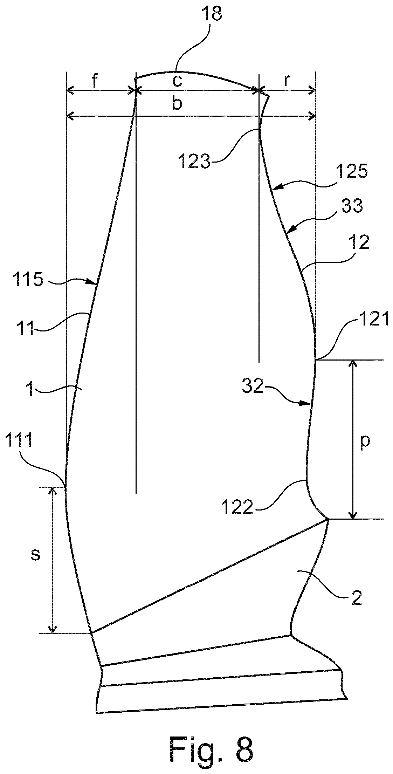

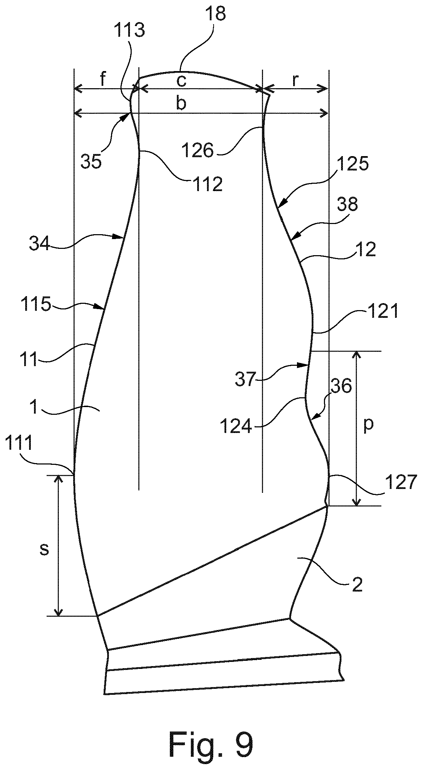

Anhand der Figur 7 wird die Definition der x-Richtung in der betrachteten Seitenansicht weitergehend erläutert. Wie ausgeführt, wird zur Definition einer eindeutigen axialen Richtung die Richtung der Profilsehne im radial untersten Profilsehnenschnitt betrachtet. Es handelt sich hierbei um den Profilsehnenschnitt, der unmittelbar oberhalb des Schaufelfußes 2 erfolgt. Da der Schaufelfuß 2 in axialer Richtung geneigt ist, nämlich in der Höhe zunimmt, wird der radial unterste vollständige Profilsehnenschnitt betrachtet, der einen Punkt der Vorderkante 11 und einen Punkt der Hinterkante 12 des Schaufelblatts 1 in einer bestimmten radialen Höhe des Schaufelblatts umfasst. Hierbei handelt es sich um den Profilsehnenschnitt 101', der durch den hinteren Fußpunkt 17 verläuft. Es wird darauf hingewiesen, dass nur für diesen Profilsehnenschnitt 101', der die axiale Richtung definiert, gilt, dass die in der betrachteten Seitenansicht dargestellte Profilsehnenlänge 14 gleich der tatsächlichen Profilsehnenlänge 14' der tatsächlichen Profilsehne 13' ist. Die Profilsehnen in anderen Profilsehnenschnitten sind in der Seitenansicht der Figur 7 (sowie der Figuren 8, 9) in einer Projektion dargestellt.

Gemäß der Figur 7 weist das Schaufelblatt 1 eine maximale projizierte Sehnenlänge b auf. Diese ist definiert als axialer Abstand zwischen dem axial vordersten Punkt 111 der Vorderkante 11 und dem axial hintersten Punkt 121 der Hinterkante 12 des Schaufelblatts 1 in der betrachteten Seitenansicht. Dabei wird bei der Definition des axial vordersten Punktes 111 und des axial hintersten Punktes 121 der sich unmittelbar an den Schaufelfuß 2 angrenzende Bereich, der sich ausgehend von dem jeweiligen Fußpunkt 16, 17 über 5 % der radialen Höhe an der Vorderkante bzw. an der Hinterkante erstreckt, nicht mit betrachtet. Dies gilt für sämtliche Ausgestaltungen der Erfindung.

Weiter ist ein Bereich f definiert, der die axiale Variation der axialen Position der Vorderkante 11 in der betrachteten Seitenansicht abhängig von der Höhe h des Schaufelblatts 1 angibt. In entsprechender Weise ist ein Bereich r definiert, der die axiale Variation der axialen Position der Hinterkante 12 in der betrachteten Seitenansicht abhängig von der Höhe h des Schaufelblatts 1 angibt. Weiter ist eine axiale Länge c definiert, die gleich der maximalen Sehnenlänge b abzüglich der Bereiche f und r ist. Die axiale Länge c entspricht zumindest näherungsweise der axialen Länge der Schaufelspitze 18.

Ein weiterer Parameter des Schaufelblatts 1 ist durch die radiale Höhe S gebildet, an der die Vorderkante 11 den axial vordersten Punkt 111 ausbildet. Die Höhe S wird dabei gemessen ausgehend von dem vorderen Fußpunkt 16 des Schaufelblatts 1, von dem aus das Schaufelblatt 1 sich an der Vorderkante 11 von dem Schaufelfuß 2 erstreckt. In entsprechender Weise ist eine radiale Höhe P definiert, an der die Hinterkante 12 den axial hintersten Punkt 121 ausbildet. Die Höhe P wird dabei gemessen ausgehend von dem hinteren Fußpunkt 17 des Schaufelblatts 1, von dem aus das Schaufelblatt 1 sich an der Hinterkante 12 von dem Schaufelfuß 2 erstreckt.

Die einzelnen Parameter b, f, r, c, S und P stehen in beispielhaften Ausgestaltungen wie folgt in Beziehung.

Der axiale Bereich f liegt im Bereich zwischen 20% und 35%, insbesondere im Bereich zwischen 23% und 27% der maximalen projizierten Sehnenlänge b: 0,23b ≤ f ≤ 0,27b. Beispielsweise liegt f bei 25% der maximalen projizierten Sehnenlänge b.

Der axiale Bereich r liegt im Bereich zwischen 20% und 35%, insbesondere im Bereich zwischen 23% und 27% der maximalen projizierten Sehnenlänge b: 0,23b ≤ r ≤ 0,27b. Beispielsweise liegt r bei 25 % der maximalen projizierten Sehnenlänge b.

Die maximale axiale Erstreckung des Schaufelblatts c an der Schaufelspitze liegt in einem Bereich zwischen 40% und 60%, insbesondere im Bereich zwischen 45% und 55% der maximalen projizierten Sehnenlänge: 0,45b ≤ c ≤ 0,55b. Beispielsweise liegt c bei 50 % der maximalen projizierten Sehnenlänge b.

Gemäß einer Ausgestaltung unterscheiden sich die Bereiche f und r in ihrer axialen Erstreckung um maximal 20 % bezogen auf die axiale Erstreckung des Bereichs f, d. h. das Schaufelblatt ist derart geformt, dass eine Wölbung axial nach vorne und axial nach hinten im Wesentlichen in gleichem Maße erfolgt. Dabei sehen Ausführungsbeispiele vor, dass die Werte von f und r identisch sind oder sich um maximal 10% bezogen auf die axiale Erstreckung des Bereichs f unterscheiden, so dass ein hohes Maß an Symmetrie im Hinblick auf die Variation des Verlaufs der Vorderkante 115 und der Hinterkante 125 vorliegt.

Die Höhe S, die die Höhe des axial vordersten Punkts 111 an der Vorderkante 11 angibt, liegt in einem Bereich zwischen 15% und 35%, insbesondere in einem Bereich zwischen 15% und 25%, insbesondere in einem Bereich zwischen 18% und 24% der Gesamthöhe h1 der Schaufel an der Vorderkante: 0,18h1 ≤ S ≤ 0,24h1. In einem Ausführungsbeispiel liegt S bei 21% der Gesamthöhe h1 der Schaufel an der Vorderkante.

Die Höhe P, die die Höhe des axial hintersten Punkts 121 an der Hinterkante 12 angibt, liegt in einem Bereich zwischen 20% und 50%, insbesondere in einem Bereich zwischen 30% und 40%, insbesondere in einem Bereich zwischen 33% und 37% der Gesamthöhe h2 der Schaufel an der Hinterkante 12: 0,33h2 ≤ P ≤ 0,37h2. In einem Ausführungsbeispiel liegt P bei 35 % der Gesamthöhe h2 der Schaufel an der Hinterkante.

Ein Ausführungsbeispiel sieht somit die folgende Kombination der Werte f, c, r, S und P vor: f = 0,25b, r = 0,25b, c = 0,5b, S = 0,21h1 und P = 0,35h2.

Weitere Parameter betreffen die Anzahl der Wendepunkte der Vorderkantenlinie 115 und der Hinterkantenlinie 125. Im Ausdrucksbeispiel der Figur 7 weist die Vorderkante 11 einen Wendepunkt 31 entlang der Vorderkantenlinie 115 auf, in dem die Krümmung der Vorderkantenlinie 115 ihr Vorzeichen endet. Dabei bildet die Vorderkantenlinie 15 zwei lokale Extrema der axialen Erstreckung aus, nämlich den axial vordersten Punkt 111 und den Punkt 112. Die Hinterkantenlinie 125 bildet zwei Wendepunkte 32, 33 und zwei lokale Extrema der axialen Erstreckung aus, nämlich den axial hintersten Punkt 121 und den weiteren Punkt 122.

Die Hinterkantenlinie 125 verläuft ausgehend vom hinteren Fußpunkt 17 zum Schaufelfuß 2 zunächst konkav, d. h. sie ist in Richtung der Vorderkante 150 eingebuchtet. Hinter dem Wendepunkt 32 nimmt die Hinterkantenlinie eine konvexe Form an, d. h. sie ist nach hinten ausgebuchtet. In dem konkaven Bereich bildet sie den axial hintersten Punkt 121 aus. Hinter dem weiteren Wendepunkt 33 ist die Form wieder konkav.

Die Figuren 8 und 9 zeigen bei grundsätzlich gleichem Aufbau des Schaufelblatts 1 wie beim Ausführungsbeispiel der Figur 7 Variationen im Verlauf der Vorderkantenlinie 115 und der Hinterkantenlinie 125.

So ist gemäß der Figur 8 vorgesehen, dass die Vorderkantenlinie 115 keinen Wendepunkt und lediglich ein Extremum aufweist, das sie an dem axial vordersten Punkt 111 ausbildet. Die Hinterkantenlinie 125 bildet zwei Wendepunkte 32, 33 und drei lokale Extrema aus, nämlich den axial hintersten Punkt 121 und zwei weitere Punkte 122, 123.

Gemäß der Figur 9 ist vorgesehen, dass die Vorderkantenkurve 115 zwei Wendepunkte 34, 35 und drei lokale Extrema aufweist, nämlich den axial vordersten Punkt 111 und zwei weitere Punkte 112, 113. Die Hinterkantenlinie 125 bildet bei diesem Ausführungsbeispiel drei Wendepunkte 36, 37, 38 und vier lokale Extrema aus, nämlich den axial hintersten Punkt 121 und drei weitere Punkte 124, 126, 127 aus.

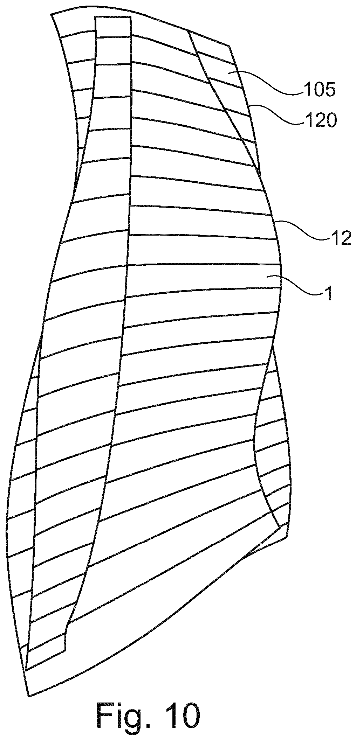

Die Fig. 10 zeigt beispielhaft und schematisch zum einen ein erfindungsgemäßes Schaufelblatt 1 mit einer gekrümmten Hinterkante 12 und ein gemäß dem Stand der Technik ausgebildetes Schaufelblatt 105 mit einer im Wesentlichen gerade ausgebildeten Hinterkante 120. Die beiden Schaufelblätter 1, 105 sind ineinander gezeichnet, um die Unterschiede im Verlauf stärker zu verdeutlichen. Aufgrund des gekrümmten Verlaufs erstreckt sich die Hinterkante 12 des Schaufelblatts 1 in bestimmten Höhenbereichen des Schaufelblatts 1 weiter nach hinten, wodurch ein Schaufelflattern bei Teillast reduziert wird.

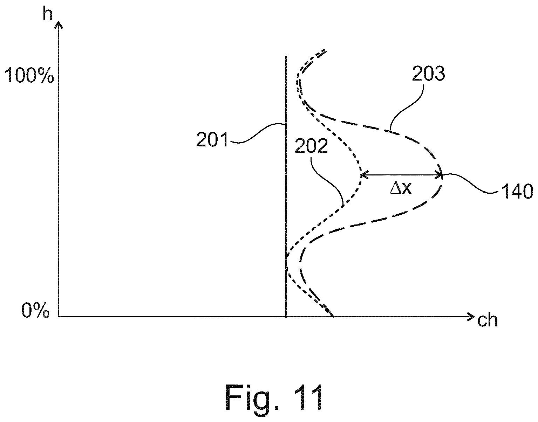

Die Figur 11 zeigt beispielhaft die tatsächliche (nicht die projizierte) Profilsehnenlänge ch eines Schaufelblatts abhängig von der Höhe h der Schaufel. Der Graph 201 zeigt ein Schaufelblatt, das weder an der Vorderkante noch an der Hinterkante gekrümmt ist und dessen Profilsehnenlänge dementsprechend über der gesamten Höhe h konstant ist. Der Graph 202 zeigt ein Schaufelblatt, das nur an der Vorderkante gekrümmt ist. Die Profilsehnenlänge ch variiert abhängig von der Höhe h, wobei die Profilsehnenlänge ch bei einer mittleren Höhe der Schaufel maximal ist. Der Graph 203 zeigt ein Schaufelblatt, das sowohl an der Vorderkante als auch an der Hinterkante gekrümmt ist. Die Profilsehnenlänge ch variiert noch deutlich stärker als bei dem Graph 202 abhängig von der Höhe h, wobei die Profilsehnenlänge bei einer mittleren Höhe der Schaufel ein Maximum 140 aufweist. Das Maximum 140 wird beispielsweise in einer Höhe der Schaufel erreicht, die im Bereich zwischen 15% und 65%, insbesondere im Bereich zwischen 30% und 60%, insbesondere im Bereich zwischen 50% und 60%, insbesondere im Bereich zwischen 55% und 60% der Gesamthöhe der Schaufel an der Vorderkante liegt. Der Zuwachs an Profilsehnenlänge ch vom Graph 202 zum Graph 203 ist mit Δx gekennzeichnet.

Die Lösung gemäß dem Graph 203 ermöglicht somit eine besonders starke Variation der Profilsehnenlänge über der Schaufelhöhe h. Wie auch in der Fig. 5 zu erkennen, ist dabei sowohl die Vorderkante axial nach vorne gewölbt als auch die Hinterkante axial nach hinten gewölbt, wodurch sich eine verbesserte Stabilität gegen Flatterschaufeln ergibt.

Die Variation der Profilsehnenlänge kann gemäß einer Ausführungsvariante in der Weise erfolgen, dass durch eine stärkere Ausbuchtung des Schaufelblatts an der Hinterkante das Schaufelblatt derart ausgelegt ist, dass bei mindestens einer Schwingungsmode die Schaufel im Bereich der Schaufelspitze 18 im Wesentlichen in Umfangsrichtung des Rotors schwingt. Hierzu wird angemerkt, dass allgemein gilt, dass bei der Schaufel der Figuren 7 bis 9 der untere, an den Schaufelfuß 2 angrenzende Bereich bis zur radialen Höhe des axial hintersten Punkts 121 im Wesentlichen nicht schwingt. Eine Schwingung erfährt dagegen primär der sich daran anschließende obere Bereich des Schaufelblatts 1. Durch die Variation der Profilsehnenlänge auch an der Hinterkante kann diese Schwingung in günstiger Weise beeinflusst werden.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Weiter wird darauf hingewiesen, dass beliebige der beschriebenen Merkmale separat oder in Kombination mit beliebigen anderen Merkmalen eingesetzt werden können, sofern sie sich nicht gegenseitig ausschließen. Die Offenbarung dehnt sich auf alle Kombinationen und Unterkombinationen eines oder mehrerer Merkmale aus, die hier beschrieben werden und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Rotor-Schaufelblatt (1) einer Strömungsmaschine, das aufweist:
- eine Vorderkante (11'),
- eine Hinterkante (12'),
- eine von der Höhe des Schaufelblatts (1) abhängige Profilsehnenlänge (14'), wobei die Profilsehne (13') die Verbindungslinie zwischen der Vorderkante (11') und der Hinterkante (12') des Schaufelblatts (1) ist,
- wobei das Schaufelblatt (1) eine radiale Erstreckung besitzt, die eine radiale Richtung (h) definiert, wobei eine zu der radialen Richtung (h) senkrecht verlaufende und in Richtung der Hinterkante (12) gerichtete axiale Richtung (x) des Schaufelblatts (1) definiert ist durch die Profilsehne (13') des Schaufelblatts (1), die das Schaufelblatt (1) in seinem radial untersten Profilsehnenschnitt (101') ausbildet, der einen Punkt der Vorderkante (11') und einen Punkt der Hinterkante (12') des Schaufelblatts in einer bestimmten radialen Höhe des Schaufelblatts (1) umfasst,
- wobei in einer Seitenansicht des Schaufelblatts (1), die eine Orthogonalprojektion des Schaufelblatts (1) in einer Ebene darstellt, die durch die axiale Richtung (x) und die radiale Richtung (h) aufgespannt wird, eine maximale projizierte Sehnenlänge (b) definiert ist als axialer Abstand zwischen dem axial vordersten Punkt (111) der Vorderkante (11) und dem axial hintersten Punkt (121) der Hinterkante (12) des Schaufelblatts in der betrachteten Seitenansicht, wobei bei der Bestimmung des axial vordersten Punktes (111) der Vorderkante (11) und des axial hintersten Punktes (121) der Hinterkante (12) derjenige Bereich der Vorderkante (11) und der Hinterkante (12) nicht berücksichtigt wird, der sich ausgehend von dem jeweiligen Fußpunkt (16, 17) an einem Schaufelfuß (2) über 5 % der radialen Höhe an der Vorderkante (11) und an der Hinterkante (12) erstreckt, wobei
- in der betrachteten Seitenansicht die axiale Position der Vorderkante (11) abhängig von der Höhe (h) des Schaufelblatts (1) über einen vorderen axialen Bereich (f) variiert, wobei
- bezogen auf die betrachtete Seitenansicht die axiale Position der Hinterkante (12) des Schaufelblatts (1) abhängig von der Höhe des Schaufelblatts (1) über einen hinteren axialen Bereich (r) variiert, wobei die Variation der axialen Position der Hinterkante (12) im hinteren axialen Bereich (r) mindestens 10% der maximalen projizierten Sehnenlänge (b) beträgt, und
- die Hinterkante (12) des Schaufelblatts (1) den axial hintersten Punkt (121) in einer Höhe (P) des Schaufelblatts annimmt, die im Bereich zwischen 20% und 50% der Gesamthöhe (h2) des Schaufelblatts (1) an der Hinterkante (12) liegt,
**dadurch gekennzeichnet, dass**
die Vorderkante (11) des Schaufelblatts (1) den axial vordersten Punkt (111) in einer Höhe (S) des Schaufelblatts (1) annimmt, die im Bereich zwischen 15% und 35% der Gesamthöhe (h1) des Schaufelblatts (1) an der Vorderkante (11) liegt, und
die Variation der axialen Position der Vorderkante (11) im vorderen axialen Bereich (f) und die Variation der axialen Position der Hinterkante (12) im hinteren axialen Bereich (r) identisch sind oder sich um maximal 10% bezogen auf die Variation der axialen Position der Vorderkante (11) im vorderen axialen Bereich (f) unterscheiden.

2. Schaufelblatt nach Anspruch 1, **dadurch gekennzeichnet, dass** die Variation der axialen Position der Hinterkante (12) im hinteren axialen Bereich (r) im Bereich zwischen 20% und 35% der maximalen projizierten Sehnenlänge (b) liegt.

3. Schaufelblatt nach Anspruch 2, **dadurch gekennzeichnet, dass** die Variation der axialen Position der Hinterkante (12) im hinteren axialen Bereich (r) im Bereich zwischen 23% und 27% der maximalen projizierten Sehnenlänge (b) liegt.

4. Schaufelblatt nach einem der vorangehenden Ansprüche, **dadurch gekennzeichnet, dass** die Variation der axialen Position der Vorderkante (11) im vorderen axialen Bereich (f) im Bereich zwischen 20% und 35% der maximalen projizierten Sehnenlänge (b) liegt.

5. Schaufelblatt nach Anspruch 4, **dadurch gekennzeichnet, dass** die Variation der axialen Position der Vorderkante (11) im vorderen axialen Bereich (f) im Bereich zwischen 23% und 27% der maximalen projizierten Sehnenlänge (b) liegt.

6. Schaufelblatt nach einem der vorangehenden Ansprüche, **dadurch gekennzeichnet, dass** die Profilsehnenlänge (c) an der Schaufelspitze (18) des Schaufelblatts (1) im Bereich zwischen 30% und 70%, insbesondere im Bereich zwischen 45% und 55% der maximalen projizierten Sehnenlänge (b) liegt.

7. Schaufelblatt nach einem der vorangehenden Ansprüche, **dadurch gekennzeichnet, dass** die Hinterkante (12) des Schaufelblatts (1) den axial hintersten Punkt (121) in einer Höhe (P) des Schaufelblatts annimmt, die im Bereich zwischen 33% und 37% der Gesamthöhe (h2) des Schaufelblatts (1) an der Hinterkante (12) liegt.

8. Schaufelblatt nach einem der vorangehenden Ansprüche, **dadurch gekennzeichnet, dass** die Vorderkante (11) des Schaufelblatts (1) den axial vordersten Punkt (111) in einer Höhe (S) des Schaufelblatts (1) annimmt, die im Bereich zwischen 18% und 24% der Gesamthöhe (h1) des Schaufelblatts (1) an der Vorderkante (11) liegt.

9. Schaufelblatt nach einem der vorangehenden Ansprüche, **dadurch gekennzeichnet, dass** die maximale Profilsehnenlänge (140) des Schaufelblatts (1) in einer Höhe des Schaufelblatts (1) realisiert ist, die im Bereich zwischen 15% und 65% der Gesamthöhe des Schaufelblatts an der Vorderkante (11) liegt.

10. Schaufelblatt nach Anspruch 9, **dadurch gekennzeichnet, dass** die maximale Profilsehnenlänge (140) des Schaufelblatts (1) in einer Höhe des Schaufelblatts (1) realisiert ist, die im Bereich zwischen 50% und 60% der Gesamthöhe des Schaufelblatts an der Vorderkante (11) liegt.

11. Schaufelblatt nach einem der vorangehenden Ansprüche, **dadurch gekennzeichnet, dass** die Hinterkantenlinie (125) des Schaufelblatts (1) in der betrachteten Seitenansicht mindestens einen Wendepunkt (32, 33, 36, 37, 38) aufweist.

12. Schaufelblatt nach Anspruch 11, **dadurch gekennzeichnet, dass** die Hinterkantenlinie (125) des Schaufelblatts (1) angrenzend an einen Schaufelfuß (2) in Richtung der Vorderkante (150) zunächst eingebuchtet ist und hinter einem Wendepunkt (32) nach hinten ausgebuchtet ist.

13. Schaufelblatt nach einem der vorangehenden Ansprüche, **dadurch gekennzeichnet, dass** die Hinterkantenlinie (125) des Schaufelblatts (1) oberhalb des axial hintersten Punktes (121) der Hinterkante (12) einen Wendepunkt (33) ausbildet.

14. Schaufelblatt nach einem der vorangehenden Ansprüche, **dadurch gekennzeichnet, dass** das Schaufelblatt (1) derart ausgelegt ist, dass bei zumindest einer Schwingungsmode das Schaufelblatt (1) an seiner Schaufelspitze (18) in Umfangsrichtung schwingt.

## Claims

1. Rotor blade aerofoil (1) of a turbomachine, having:
- a leading edge (11'),
- a trailing edge (12'),
- a profile-chord length (14') which is dependent on the height of the blade aerofoil (1), wherein the profile chord (13') is the connecting line between the leading edge (11') and the trailing edge (12') of the blade aerofoil (1),
- wherein the blade aerofoil (1) has a radial extent which defines a radial direction (h), wherein an axial direction (x), extending perpendicularly to the radial direction (h) and directed in the direction of the trailing edge (12), of the blade aerofoil (1) is defined by the profile chord (13') of the blade aerofoil (1) that is formed by the blade aerofoil (1) at its radially lowermost profile-chord section (101'), which comprises a point of the leading edge (11') and a point of the trailing edge (12') of the blade aerofoil at a particular radial height of the blade aerofoil (1),
- wherein, in a side view of the blade aerofoil (1), which constitutes an orthogonal projection of the blade aerofoil (1) in a plane spanned by the axial direction (x) and the radial direction (h), a maximum projected chord length (b) is defined as the axial distance between the axially foremost point (111) of the leading edge (11) and the axially rearmost point (121) of the trailing edge (12) of the blade aerofoil in the side view under consideration, wherein, in determining the axially foremost point (111) of the leading edge (11) and the axially rearmost point (121) of the trailing edge (12), that region of the leading edge (11) and of the trailing edge (12) which, proceeding from the respective root point (16, 17) on an blade root (2), extends over 5% of the radial height at the leading edge (11) and at the trailing edge (12) is not taken into account, wherein,
- in the side view under consideration, the axial position of the leading edge (11) varies over a front axial region (f) in a manner dependent on the height (h) of the blade aerofoil (1), wherein,
- in relation to the side view under consideration, the axial position of the trailing edge (12) of the blade aerofoil (1) varies over a rear axial region (r) in a manner dependent on the height of the blade aerofoil (1), wherein the variation of the axial position of the trailing edge (12) in the rear axial region (r) is at least 10% of the maximum projected chord length (b), and
- the trailing edge (12) of the blade aerofoil (1) assumes the axially rearmost point (121) at a height (P) of the blade aerofoil that lies in the range between 20% and 50% of the total height (h2) of the blade aerofoil (1) at the trailing edge (12),
**characterized in that**
the leading edge (11) of the blade aerofoil (1) assumes the axially foremost point (111) at a height (S) of the blade aerofoil (1) that lies in the range between 15% and 35% of the total height (h1) of the blade aerofoil (1) at the leading edge (11), and
the variation of the axial position of the leading edge (11) in the front axial position (f) and the variation of the axial position of the trailing edge (12) in the rear axial position (r) are identical or differ by at most 10% in relation to the variation of the axial position of the leading edge (11) in the front axial region (f).

2. Blade aerofoil according to Claim 1, **characterized in that** the variation of the axial position of the trailing edge (12) in the rear axial region (r) lies in the range between 20% and 35% of the maximum projected chord length (b).

3. Blade aerofoil according to Claim 2, **characterized in that** the variation of the axial position of the trailing edge (12) in the rear axial region (r) lies in the range between 23% and 27% of the maximum projected chord length (b).

4. Blade aerofoil according to one of the preceding claims, **characterized in that** the variation of the axial position of the leading edge (11) in the front axial region (f) lies in the range between 20% and 35% of the maximum projected chord length (b).

5. Blade aerofoil according to Claim 4, **characterized in that** the variation of the axial position of the leading edge (11) in the front axial region (f) lies in the range between 23% and 27% of the maximum projected chord length (b).

6. Blade aerofoil according to one of the preceding claims, **characterized in that** the profile-chord length (c) at the blade tip (18) of the blade aerofoil (1) lies in the range between 30% and 70%, in particular in the range between 45% and 55%, of the maximum projected chord length (b).

7. Blade aerofoil according to one of the preceding claims, **characterized in that** the trailing edge (12) of the blade aerofoil (1) assumes the axially rearmost point (121) at a height (P) of the blade aerofoil that lies in the range between 33% and 37% of the total height (h2) of the blade aerofoil (1) at the trailing edge (12).

8. Blade aerofoil according to one of the preceding claims, **characterized in that** the leading edge (11) of the blade aerofoil (1) assumes the axially foremost point (111) at a height (S) of the blade aerofoil (1) that lies in the range between 18% and 24% of the total height (h1) of the blade aerofoil (1) at the leading edge (11).

9. Blade aerofoil according to one of the preceding claims, **characterized in that** the maximum profile-chord length (140) of the blade aerofoil (1) is realized at a height of the blade aerofoil (1) that lies in the range between 15% and 65% of the total height of the blade aerofoil at the leading edge (11) .

10. Blade aerofoil according to Claim 9, **characterized in that** the maximum profile-chord length (140) of the blade aerofoil (1) is realized at a height of the blade aerofoil (1) that lies in the range between 50% and 60% of the total height of the blade aerofoil at the leading edge (11).

11. Blade aerofoil according to one of the preceding claims, **characterized in that** the trailing-edge curve (125) of the blade aerofoil (1) in the side view under consideration has at least one point of inflection (32, 33, 36, 37, 38).

12. Blade aerofoil according to Claim 11, **characterized in that** the trailing-edge curve (125) of the blade aerofoil (1) is, adjacent to a blade root (2), initially bulged inwards in the direction of the leading edge (150) and is, after a point of inflection (32), bulged outwards towards the rear.

13. Blade aerofoil according to one of the preceding claims, **characterized in that**, above the axially rearmost point (121) of the trailing edge (12), the trailing-edge curve (125) of the blade aerofoil (1) forms a point of inflection (33).

14. Blade aerofoil according to one of the preceding claims, **characterized in that** the blade aerofoil (1) is designed in such a way that, in at least one vibration mode, the blade aerofoil (1) vibrates in a circumferential direction at its blade tip (18).

## Revendications

1. Pale d'aube de rotor (1) d'une turbomachine, qui présente :
- un bord d'attaque (11'),
- un bord de fuite (12'),
- une longueur de corde de profil (14') dépendante de la hauteur de la pale d'aube (1), la corde de profil (13') étant la ligne de connexion entre le bord d'attaque (11') et le bord de fuite (12') de la pale d'aube (1),
- la pale d'aube (1) possédant une étendue radiale qui définit une direction radiale (h), une direction axiale (x) de la pale d'aube (1), laquelle direction s'étend perpendiculairement à la direction radiale (h) et est orientée en direction du bord de fuite (12), étant définie par la corde de profil (13') de la pale d'aube (1), laquelle corde de profil forme la pale d'aube (1) dans sa section de corde de profil (101') radialement la plus basse, laquelle section comprend un point du bord d'attaque (11') et un point du bord de fuite (12') de la pale d'aube dans une hauteur radiale déterminée de la pale d'aube (1),
- dans une vue de côté de la pale d'aube (1), qui constitue une projection orthogonale de la pale d'aube (1) dans un plan qui est défini par la direction axiale (x) et la direction radiale (h), une longueur de corde (b) projetée maximale étant définie comme la distance axiale entre le point (111) axialement le plus à l'avant du bord d'attaque (11) et le point (121) axialement le plus à l'arrière du bord de fuite (12) de la pale d'aube dans la vue de côté considérée, et lors de la détermination du point (111) axialement le plus à l'avant du bord d'attaque (11) et du point (121) axialement le plus à l'arrière du bord de fuite (12), la région du bord d'attaque (11) et du bord de fuite (12) qui s'étend à partir du point de pied (16, 17) respectif au niveau d'un pied d'aube (2) sur 5 % de la hauteur radiale au niveau du bord d'attaque (11) et au niveau du bord de fuite (12) n'étant pas prise en compte,
- dans la vue de côté considérée, la position axiale du bord d'attaque (11) variant en fonction de la hauteur (h) de la pale d'aube (1) sur une région (f) axiale avant,
- par rapport à la vue de côté considérée, la position axiale du bord de fuite (12) de la pale d'aube (1) variant en fonction de la hauteur de la pale d'aube (1) sur une région (r) axiale arrière, la variation de la position axiale du bord de fuite (12) dans la région (r) axiale arrière valant au moins 10 % de la longueur de corde (b) projetée maximale, et
- le bord de fuite (12) de la pale d'aube (1) adoptant le point (121) axialement le plus à l'arrière dans une hauteur (P) de la pale d'aube qui se situe dans la plage entre 20 % et 50 % de la hauteur totale (h2) de la pale d'aube (1) au niveau du bord de fuite (12),
**caractérisée en ce que**
le bord d'attaque (11) de la pale d'aube (1) adopte le point (111) axialement le plus à l'avant dans une hauteur (S) de la pale d'aube (1) qui se situe dans la plage entre 15 % et 35 % de la hauteur totale (h1) de la pale d'aube (1) au niveau du bord d'attaque (11), et
la variation de la position axiale du bord d'attaque (11) dans la région (f) axiale avant et la variation de la position axiale du bord de fuite (12) dans la région (r) axiale arrière étant identiques ou différant d'au maximum 10 % par rapport à la variation de la position axiale du bord d'attaque (11) dans la région (f) axiale avant.

2. Pale d'aube selon la revendication 1, **caractérisée en ce que** la variation de la position axiale du bord de fuite (12) dans la région (r) axiale arrière se situe dans la plage entre 20 % et 35 % de la longueur de corde (b) projetée maximale.

3. Pale d'aube selon la revendication 2, **caractérisée en ce que** la variation de la position axiale du bord de fuite (12) dans la région (r) axiale arrière se situe dans la plage entre 23 % et 27 % de la longueur de corde (b) projetée maximale.

4. Pale d'aube selon l'une des revendications précédentes, **caractérisée en ce que** la variation de la position axiale du bord d'attaque (11) dans la région (f) axiale avant se situe dans la plage entre 20 % et 35 % de la longueur de corde (b) projetée maximale.

5. Pale d'aube selon la revendication 4, **caractérisée en ce que** la variation de la position axiale du bord d'attaque (11) dans la région (f) axiale avant se situe dans la plage entre 23 % et 27 % de la longueur de corde (b) projetée maximale.

6. Pale d'aube selon l'une des revendications précédentes, **caractérisée en ce que** la longueur de corde de profil (c) au niveau de la pointe d'aube (18) de la pale d'aube (1) se situe dans la plage entre 30 % et 70 %, en particulier dans la plage entre 45 % et 55 % de la longueur de corde (b) projetée maximale.

7. Pale d'aube selon l'une des revendications précédentes, **caractérisée en ce que** le bord de fuite (12) de la pale d'aube (1) adopte le point (121) axialement le plus à l'arrière dans une hauteur (P) de la pale d'aube qui se situe dans la plage entre 33 % et 37 % de la hauteur totale (h2) de la pale d'aube (1) au niveau du bord de fuite (12).

8. Pale d'aube selon l'une des revendications précédentes, **caractérisée en ce que** le bord d'attaque (11) de la pale d'aube (1) adopte le point (111) axialement le plus à l'avant dans une hauteur (S) de la pale d'aube (1) qui se situe dans la plage entre 18 % et 24 % de la hauteur totale (h1) de la pale d'aube (1) au niveau du bord d'attaque (11).

9. Pale d'aube selon l'une des revendications précédentes, **caractérisée en ce que** la longueur de corde de profil (140) maximale de la pale d'aube (1) est réalisée dans une hauteur de la pale d'aube (1) qui se situe dans la plage entre 15 % et 65 % de la hauteur totale de la pale d'aube au niveau du bord d'attaque (11) .

10. Pale d'aube selon la revendication 9, **caractérisée en ce que** la longueur de corde de profil (140) maximale de la pale d'aube (1) est réalisée dans une hauteur de la pale d'aube (1) qui se situe dans la plage entre 50 % et 60 % de la hauteur totale de la pale d'aube au niveau du bord d'attaque (11).

11. Pale d'aube selon l'une des revendications précédentes, **caractérisée en ce que** la ligne de bord de fuite (125) de la pale d'aube (1) présente au moins un point d'inflexion (32, 33, 36, 37, 38) dans la vue de côté considérée.

12. Pale d'aube selon la revendication 11, **caractérisée en ce que** la ligne de bord de fuite (125) de la pale d'aube (1), de manière adjacente à un pied d'aube (2), est tout d'abord renfoncée en direction du bord d'attaque (150) et est renflée vers l'arrière derrière un point d'inflexion (32).

13. Pale d'aube selon l'une des revendications précédentes, **caractérisée en ce que** la ligne de bord de fuite (125) de la pale d'aube (1) forme un point d'inflexion (33) au-dessus du point (121) axialement le plus à l'arrière du bord de fuite (12).

14. Pale d'aube selon l'une des revendications précédentes, **caractérisée en ce que** la pale d'aube (1) est conçue de telle sorte que, dans au moins un mode de vibration, la pale d'aube (1) vibre dans la direction circonférentielle au niveau de sa pointe d'aube (18).
